(19) **Europäisches Patentamt**
**European Patent Office**
**Office européen des brevets**

(11) **EP 3 954 657 A1**

(12) **EUROPEAN PATENT APPLICATION**
published in accordance with Art. 153(4) EPC

(43) Date of publication:
**16.02.2022 Bulletin 2022/07**

(21) Application number: **19924402.1**

(22) Date of filing: **20.12.2019**

(51) International Patent Classification (IPC):
**C01G 53/00** (2006.01)      **H01M 4/505** (2010.01)
**H01M 4/525** (2010.01)

(52) Cooperative Patent Classification (CPC):
**C01G 53/00; H01M 4/505; H01M 4/525;**
Y02E 60/10

(86) International application number:
**PCT/JP2019/050010**

(87) International publication number:
**WO 2020/208874 (15.10.2020 Gazette 2020/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.04.2019 JP 2019076524**

(71) Applicant: **SUMITOMO CHEMICAL COMPANY LIMITED**
**Chuo-ku**
**Tokyo 104-8260 (JP)**

(72) Inventors:
• **INOUE Masashi**
**Niihama-shi, Ehime 792-8521 (JP)**
• **MATSUO Yoji**
**Niihama-shi, Ehime 792-8521 (JP)**
• **MATSUMOTO Yuki**
**Niihama-shi, Ehime 792-8521 (JP)**

(74) Representative: **Vossius & Partner**
**Patentanwälte Rechtsanwälte mbB**
**Siebertstraße 3**
**81675 München (DE)**

(54) **LITHIUM METAL COMPLEX OXIDE POWDER, POSITIVE ELECTRODE ACTIVE SUBSTANCE FOR LITHIUM SECONDARY BATTERY, AND LITHIUM METAL COMPLEX OXIDE POWDER PRODUCTION METHOD**

(57)      This lithium metal composite oxide powder satisfies the following requirement (1) and requirement (2). Requirement (1): a peak top is present in a binding energy range of 52 eV to 58 eV, and the spectrum in the above-described range is separated into waveforms of a peak A having a peak top at $53.5 \pm 1.0$ eV and a peak B having a peak top at $55.5 \pm 1.0$ eV. A value of P(A)/P(B) that is a ratio between areas of the peak A and the peak B is 0.3 or more and 3.0 or less. Requirement (2): X(M)/X(Li) that is a ratio between X(Li) that is an amount of lithium that is obtained based on a peak area of a Li1s spectrum and X(M) that is an element amount of an element M obtained based on a peak area of a spectrum of the element M is 0.2 or more and 2.0 or less.

**EP 3 954 657 A1**

**Description**

[Technical Field]

The present invention relates to a lithium metal composite oxide powder, a positive electrode active material for a lithium secondary battery, and a method for producing a lithium metal composite oxide powder.
Priority is claimed on Japanese Patent Application No. 2019-076524, filed in Japan on April 12, 2019, the content of which is incorporated herein by reference.

[Background Art]

Attempts of putting lithium secondary batteries into practical use not only for small-sized power sources in mobile phone applications, notebook personal computer applications, and the like but also for medium-sized or large-sized power sources in automotive applications, power storage applications, and the like have already been underway. In lithium secondary batteries, a positive electrode active material is used. As the positive electrode active material, a lithium metal composite oxide powder is used.
When a lithium metal composite oxide powder is used as a positive electrode active material for a lithium secondary battery, the lithium metal composite oxide powder comes into contact with an electrolytic solution on the surfaces of primary particles, on the surfaces of secondary particles, and inside the secondary particles in lithium secondary batteries. In lithium secondary batteries, lithium ions are inserted into the particles and desorbed from the insides of the particles through the particle surfaces of the lithium metal composite oxide depending on charging and discharging. Therefore, it is important to control the surface state of the primary particles or secondary particles of the lithium metal composite oxide powder in order to improve battery characteristics.
For example, Patent Document 1 describes a positive electrode active material for a lithium secondary battery in which boron is mainly present on the surfaces of lithium manganese composite oxide particles that are a positive electrode active material.

[Citation List]

[Patent Document]

[Patent Document 1]
Japanese Unexamined Patent Application, First Publication No. 2002-42812

[Summary of Invention]

[Technical Problem]

For lithium secondary batteries that are obtained using as a positive electrode active material for a lithium secondary battery, additional improvement in battery characteristics is required, and there is sufficient room for improvement in the technique described in Patent Document 1.
The present invention has been made in view of the above-described circumstances, and an object of the present invention is to provide a lithium metal composite oxide powder capable of improving the initial charge and discharge efficiency and the cycle retention rate of a lithium secondary battery in the case of being used as a positive electrode active material for the lithium secondary battery, a positive electrode active material for a lithium secondary battery in which the same is used, and a method for producing a lithium metal composite oxide powder.

[Solution to Problem]

That is, the present invention includes the following inventions [1] to [11].

[1] A lithium metal composite oxide powder having a layered structure, containing at least Li, Ni, an element X, and an element M, in which the element X is one or more elements selected from the group consisting of Co, Mn, Fe, Cu, Ti, Mg, Al, W, Mo, Nb, Zn, Sn, Zr, Ga, and V, the element M is one or more elements selected from the group consisting of B, Si, S, and P, and a spectrum that is obtained when the lithium metal composite oxide powder is measured by XPS satisfies the following requirement (1) and requirement (2).

Requirement (1)

A peak top is present in a binding energy range of 52 eV to 58 eV. The spectrum in the above-described range is separated into waveforms of a peak A having a peak top at 53.5 $\pm$ 1.0 eV and a peak B having a peak top at 55.5 $\pm$ 1.0 eV. A value of a ratio (P(A)/P(B)) between integrated intensities of the peak A and the peak B is 0.3 or more and 3.0 or less.

Requirement (2)
A ratio (X(M)/X(Li)) between an amount of lithium (X(Li)) that is obtained based on a peak area of a Li1s spectrum and an element amount of an element M (X(M)) that is obtained based on a peak area of a spectrum of the element M is 0.2 or more and 2.0 or less.

[2] The lithium metal composite oxide powder according to [1] that is represented by the following composition formula (I).

$$Li[Li_{n1}(Ni_{(1-n-w)}X_nM_w)_{1-n1}]O_2 \cdots \qquad (I)$$

(The element M is one or more elements selected from the group consisting of B, Si, S, and P. The element X is one or more elements selected from the group consisting of Co, Mn, Fe, Cu, Ti, Mg, Al, W, Mo, Nb, Zn, Sn, Zr, Ga, and V. Here, $-0.1 \le n1 \le 0.2$, $0 < n \le 0.8$, $0 < w \le 0.05$, and $n + w < 1$.)

[3] The lithium metal composite oxide powder according to [1] or [2], in which, when a lithium atom concentration that is calculated from peak areas of the Li1s spectrum, a Ni2p spectrum, and a spectrum of the element X is indicated by X(Li), a nickel atom concentration is indicated by X(Ni), and an atomic concentration of the element X is indicated by X(X), a ratio (X(Li)/{X(Ni) + X(X)}) of an atomic concentration of lithium to a total atomic concentration of nickel and the element X is 1.0 or more and 5.0 or less.

[4] The lithium metal composite oxide powder according to any one of [1] to [3], in which, when an atomic concentration of the element M that is calculated from peak areas of the spectrum of the element M, a Ni2p spectrum, and a spectrum of the element X is indicated by X(M), a nickel atom concentration is indicated by X(Ni), and an atomic concentration of the element X is indicated by X(X), a ratio (X(M)/{X(Ni) + X(X)}) of an atomic concentration of the element M to a total atomic concentration of nickel and the element X is 0.3 or more and 6.0 or less.

[5] The lithium metal composite oxide powder according to any one of [1] to [4], in which an average particle diameter $D_{50}$ that is a 50% cumulative diameter obtained from wet-type particle size distribution measurement is 2 $\mu$m or more and 20 $\mu$m or less.

[6] A positive electrode active material for a lithium secondary battery, containing the lithium metal composite oxide powder according to any one of [1] to [5].

[7] A method for producing a lithium metal composite oxide powder, including a step of mixing a precursor of a positive electrode active material for a lithium secondary battery and a lithium compound to obtain a first mixture, a step of calcining the first mixture to obtain a raw material compound, a step of mixing the raw material compound and a compound containing an element M to obtain a second mixture, and a thermal treatment step of heating the second mixture in an oxidizing atmosphere, in which a BET specific surface area of the compound containing the element M is 0.14 m$^2$/g or more and 2.0 m$^2$/g or less.

[8] The method for producing a lithium metal composite oxide powder according to [7], in which the lithium metal composite oxide that is obtained after the thermal treatment step is represented by the following composition formula (I).

$$Li[Li_{n1}(Ni_{(1-n-w)}X_nM_w)_{1-n1}]O_2 \cdots \qquad (I)$$

(M is one or more elements selected from the group consisting of B, Si, S, and P. X is one or more elements selected from the group consisting of Co, Mn, Fe, Cu, Ti, Mg, Al, W, Mo, Nb, Zn, Sn, Zr, Ga, and V. Here, $-0.1 \le n1 \le 0.2$, $0 < n \le 0.8$, $0 < w \le 0.05$, and $n + w < 1$.)

[9] The method for producing a lithium metal composite oxide powder according to [7] or [8], in which, in the step of obtaining the second mixture, the raw material compound and the compound containing the element M are mixed such that a ratio (S1/S2) of a BET specific surface area S1 of the raw material compound to a BET specific surface area S2 of the compound containing the element M becomes 0.2 or more and 10 or less.

[10] The method for producing a lithium metal composite oxide powder according to any one of [7] to [9], in which, in the step of obtaining the second mixture, a molar amount of the compound of the element M is more than 0 mol% and 5 mol% or less with respect to a total amount (100 mol%) of the raw material compound charged.

[11] The method for producing a lithium metal composite oxide powder according to any one of [7] to [10], in which, in the thermal treatment step, heating is carried out at a temperature of 250°C or higher and 550°C or lower.

Furthermore, as the aspect of the present invention, the following aspects are exemplary examples.

[12] A positive electrode for a lithium secondary battery, containing the positive electrode active material for a lithium secondary battery according to [6]

[13] A lithium secondary battery having the positive electrode for a lithium secondary battery according to [12].

As another aspect of the present invention, the following aspects are exemplary examples.

[14] A lithium metal composite oxide powder having a layered crystal structure, containing at least Li, Ni, an element X, and an element M, in which the element X is one or more elements selected from the group consisting of Co, Mn, Fe, Cu, Ti, Mg, Al, W, Mo, Nb, Zn, Sn, Zr, Ga, and V, the element M is one or more elements selected from the group consisting of B, Si, S, and P, and a spectrum that is obtained when the lithium metal composite oxide powder is measured by X-ray photoelectron spectroscopy satisfies the following requirement (1) and requirement (2).

Requirement (1)

A peak top is present in a binding energy range of 52 eV to 58 eV, and, when the spectrum in the above-described range is separated into waveforms of a peak A having a peak top at $53.5 \pm 1.0$ eV and a peak B having a peak top at $55.5 \pm 1.0$ eV, a value of $(P(A)/P(B))$ that is a ratio between integrated intensities of the peak A and the peak B is 0.3 or more and 3.0 or less.

Requirement (2)

$X(M)/X(Li)$ that is a ratio between $X(Li)$ that is a lithium atom concentration obtained based on peak areas of a Li1s spectrum, a Ni2p spectrum, a spectrum of the element X, and a spectrum of the element M and $X(M)$ that is an atomic concentration of the element M obtained based on peak areas of the Li1s spectrum, the Ni2p spectrum, the spectrum of the element X, and the spectrum of the element M is 0.2 or more and 2.0 or less.

[15] The lithium metal composite oxide powder according to [14] that is represented by the following composition formula (I).

$$Li[Li_{n1}(Ni_{(1-n-w)}X_nM_w)_{1-n1}]O_2 \ldots \qquad (I)$$

(The element M is one or more elements selected from the group consisting of B, Si, S, and P. The element X is one or more elements selected from the group consisting of Co, Mn, Fe, Cu, Ti, Mg, Al, W, Mo, Nb, Zn, Sn, Zr, Ga, and V. Here, $-0.1 \leq n1 \leq 0.2$, $0 < n \leq 0.8$, $0 < w \leq 0.05$, and $n + w < 1$.)

[16] The lithium metal composite oxide powder according to [14] or [15], in which, when a nickel atom concentration that is calculated from peak areas of the Li1s spectrum, the Ni2p spectrum, the spectrum of the element X, and the spectrum of the element M is indicated by $X(Ni)$, and an atomic concentration of the element X is indicated by $X(X)$, $X(Li)/\{X(Ni) + X(X)\}$ that is a ratio of the lithium atom concentration to a total atomic concentration of nickel and the element X is 1.0 or more and 5.0 or less.

[17] The lithium metal composite oxide powder according to any one of [14] to [16], in which, when a nickel atom concentration that is calculated from peak areas of the Li1s spectrum, the Ni2p spectrum, the spectrum of the element X, and the spectrum of the element M is indicated by $X(Ni)$, and an atomic concentration of the element X is indicated by $X(X)$, $X(M)/\{X(Ni) + X(X)\}$ that is a ratio of the atomic concentration of the element M to a total atomic concentration of nickel and the element X is 0.3 or more and 6.0 or less.

[18] The lithium metal composite oxide powder according to any one of [14] to [17], in which an average particle diameter $D_{50}$ that is a 50% cumulative diameter obtained from wet-type particle size distribution measurement is 2 $\mu$m or more and 20 $\mu$m or less.

[19] A positive electrode active material for a lithium secondary battery, containing the lithium metal composite oxide powder according to any one of [14] to [18].

[20] A method for producing a lithium metal composite oxide powder, including mixing a precursor of a positive electrode active material for a lithium secondary battery and a lithium compound to obtain a first mixture, calcining the first mixture to obtain a raw material compound, mixing the raw material compound and a compound containing an element M to obtain a second mixture, and carrying out a thermal treatment in which the second mixture is heated in an oxidizing atmosphere, in which a BET specific surface area of the compound containing the element M is 0.14 $m^2/g$ or more and 2.0 $m^2/g$ or less.

[21] The method for producing a lithium metal composite oxide powder according to [20], in which the lithium metal composite oxide that is obtained after the thermal treatment is represented by the following composition formula (I).

$$Li[Li_{n1}(Ni_{(1-n-w)}X_nM_w)_{1-n1}]O_2 \ldots \qquad (I)$$

(M is one or more elements selected from the group consisting of B, Si, S, and P. X is one or more elements selected from the group consisting of Co, Mn, Fe, Cu, Ti, Mg, Al, W, Mo, Nb, Zn, Sn, Zr, Ga, and V. Here, $-0.1 \leq n1 \leq 0.2$, $0 < n \leq 0.8$, $0 < w \leq 0.05$, and $n + w < 1$.)

[22] The method for producing a lithium metal composite oxide powder according to [20] or [21], in which, in the obtaining of the second mixture, the raw material compound and the compound containing the element M are mixed such that S1/S2 that is a ratio of a BET specific surface area S1 of the raw material compound to a BET specific surface area S2 of the compound containing the element M becomes 0.2 or more and 10 or less.

[23] The method for producing a lithium metal composite oxide powder according to any one of [20] to [22], in which, In the obtaining of the second mixture, a molar amount of the compound of the element M is more than 0 mol% and 5 mol% or less with respect to a total amount (100 mol%) of the raw material compound charged.

[24] The method for producing a lithium metal composite oxide powder according to any one of [20] to [23], in which, in the thermal treatment, heating is carried out at a temperature of 250°C or higher and 550°C or lower.

Furthermore, as the aspect of the present invention, the following aspects are exemplary examples.

[25] A positive electrode for a lithium secondary battery, containing the positive electrode active material for a lithium secondary battery according to [19]

[26] A lithium secondary battery having the positive electrode for a lithium secondary battery according to [25].

[Advantageous Effects of Invention]

According to the present invention, it is possible to provide a lithium metal composite oxide powder capable of improving the initial charge and discharge efficiency and the cycle retention rate of a lithium secondary battery, a positive electrode active material for a lithium secondary battery in which the same is used, and a method for producing a lithium metal composite oxide powder.

[Brief Description of Drawings]

Fig. 1A is a schematic configuration view showing an example of a lithium-ion secondary battery.

Fig. 1B is a schematic configuration view showing the example of the lithium-ion secondary battery.

Fig. 2 is a view showing a Li1s spectrum obtained by XPS measurement of a lithium metal composite oxide powder of Example 3 and a peak A and a peak B obtained by waveform separation.

Fig. 3 is a view showing a Li1s spectrum obtained by XPS measurement of a lithium metal composite oxide powder of Comparative Example 1.

Fig. 4 is a view showing a Li1s spectrum obtained by XPS measurement of a lithium metal composite oxide powder of Example 5 and a peak A and a peak B obtained by waveform separation.

Fig. 5 is a view showing a Li1s spectrum obtained by XPS measurement of a lithium metal composite oxide powder of Comparative Example 3 and a peak A and a peak B obtained by waveform separation.

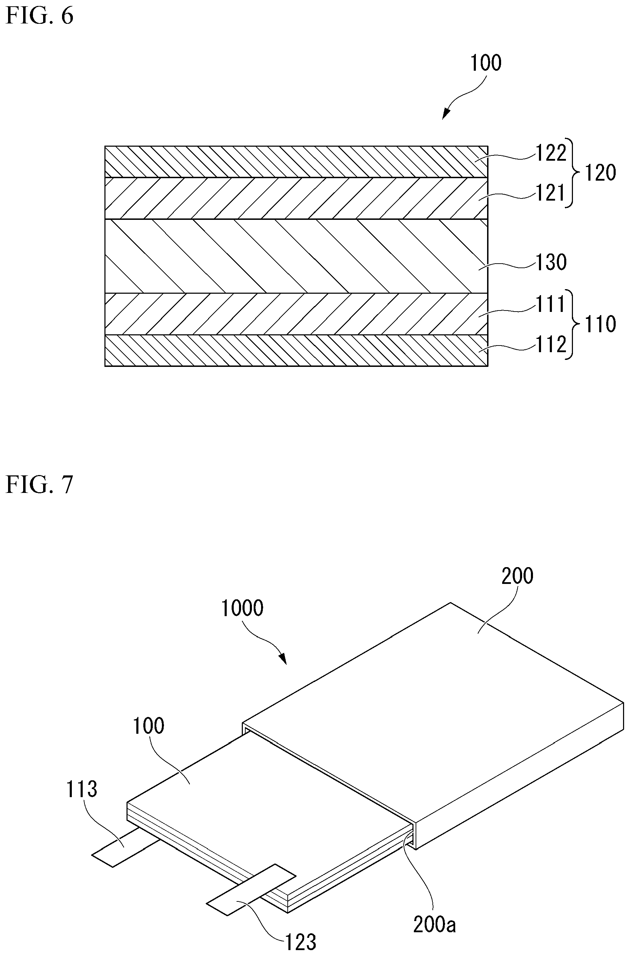

Fig. 6 is a schematic view showing a laminate that an all-solid-state lithium-ion battery of the present embodiment includes.

Fig. 7 is a schematic view showing an entire configuration of the all-solid-state lithium-ion battery of the present embodiment.

[Description of Embodiments]

<Lithium metal composite oxide powder>

The present embodiment is a lithium metal composite oxide powder having a layered crystal structure.

The lithium metal composite oxide powder of the present embodiment contains at least Li, Ni, an element X, and an element M.

The element X is one or more elements selected from the group consisting of Co, Mn, Fe, Cu, Ti, Mg, Al, W, Mo, Nb, Zn, Sn, Zr, Ga, and V.

The element M is one or more elements selected from the group consisting of B, Si, S, and P.

In the present embodiment, the element X is preferably at least one of Ti, Mg, Al, W, and Zr and more preferably at least one of Al, W, and Zr from the viewpoint of obtaining a lithium secondary battery having a high initial charge and discharge efficiency and a high cycle retention rate.

In the present embodiment, the element M forms a compound containing Li and the element M and has lithium ion conductivity. In the present embodiment, the element M is preferably at least one of B, S, and P and more preferably B from the viewpoint of obtaining a lithium secondary battery having a high initial charge and discharge efficiency and a high cycle retention rate.

A spectrum that is obtained when the surface of the lithium metal composite oxide powder of the present embodiment is measured by X-ray photoelectron spectroscopy (XPS) satisfies the following requirement (1) and requirement (2).

Requirement (1)

A peak top is present in a binding energy range of 52 eV to 58 eV, and, when the spectrum in the above-described range is separated into waveforms of a peak A having a peak top at 53.5 ± 1.0 eV and a peak B having a peak top at 55.5 ± 1.0 eV, a value of a ratio (P(A)/P(B)) between areas of the peak A and the peak B is 0.3 or more and 3.0 or less.

X-ray photoelectron spectroscopy (XPS) is used in the measurement of the requirement (1). According to XPS, it is possible to analyze configuration elements of the particle surface portion and the electronic state of the particle surface portion by measuring the energy of photoelectrons that are generated when the particle surface of the lithium metal composite oxide powder is irradiated with X-rays.

In the present embodiment, a region of 52 to 58 eV that are the binding energy of photoelectrons that are emitted from the particle surface of the lithium metal composite oxide powder when the particles of the lithium metal composite oxide powder are irradiated with AlK$\alpha$ rays as excitation X-rays is analyzed as a Li1s spectrum.

Specifically, the spectra of lithium 1s and nickel 2p, the spectrum of the element M, and the spectrum of the element X are measured using an X-ray photoelectron spectroscopic analyzer (for example, K-Alpha manufactured by Thermo Fisher Scientific Inc. AlK$\alpha$ rays may be used as the X-ray source, and a flood gun (accelerating voltage: 0.3 V, current: 100 $\mu$A) may be used for charge neutralization at the time of measurement. As the measurement conditions, it is possible to set, for example, the spot size to 400 $\mu$m, the pass energy to 50 eV, the step to 0.1 eV, and the dwell time to 500 ms.

In the present embodiment, the spectrum obtained by measuring the surface of a particle of the lithium metal composite oxide powder by XPS has a peak top in a binding energy range of 52 eV to 58 eV. In the present embodiment, the spectrum in the binding energy range of 52 eV to 58 eV is separated into waveforms of a peak A having a peak top at 53.5 ± 1.0 eV and a half width of 1.0 ± 0.2 eV and a peak B having a peak top at 55.5 ± 1.0 eV and a half width of 1.5 ± 0.3 eV.

The peak A is a peak that is derived from lithium that is contained in the lithium metal composite oxide powder having a layered crystal structure, and the peak B is a peak that is derived from a lithium compound present on the particle surfaces of the lithium metal composite oxide powder. As examples of the lithium compound, a compound in which lithium, the element M, and oxygen are bound to one another, lithium carbonate, and lithium hydroxide are exemplary examples.

In the present embodiment, since the detection depth of XPS is several nanometers to 10 nm from the particle surface that is the detection target, the magnitude of the peak B corresponds to the abundance of the lithium compound present in the outermost surface portion of the particles of the lithium metal composite oxide powder.

In the spectrum after the waveform separation that is detected by XPS, the value of the area ratio (P(A)/P(B)) of the peak A to the peak B is preferably 0.32 or more and 2.8 or less, more preferably 0.35 or more and 2.5 or less, and particularly preferably 0.4 or more and 2.0 or less.

In the present embodiment, the area ratio of the peak A to the peak B refers to the area ratio between mountain-shaped portions that are obtained by the following method.

Area of peak A: Area of a mountain-shaped portion that is formed between a line connecting the lowest points of the peak A on the right and left sides and the curve of the peak A

Area of peak B: Area of a mountain-shaped portion that is formed between a line connecting the lowest points of the peak B on the right and left sides and the curve of the peak B

Requirement (2)

A ratio (X(M)/X(Li)) between an atomic concentration of lithium (X(Li)) that is obtained based on a peak area of a Li1s spectrum and an atomic concentration of an element M (X(M)) that is obtained based on a peak area of a spectrum of the element M is 0.2 or more and 2.0 or less. The value of X(M)/X(Li) is preferably 0.25 or more and 1.9 or less, preferably 0.3 or more and 1.8 or less, more preferably 0.4 or more and 1.6 or less, and particularly preferably 0.4 or more and 1.2 or less.

Here, X(Li) can be obtained by calculating the concentration of the Li element in all of the elements as a relative value using the peak areas of the Li1s spectrum, the Ni2p spectrum, the spectrum of the element X, and the spectrum of the element M and the sensitivity coefficient of each element.

X(M) can be obtained by calculating the concentration of the element M in all of the elements as a relative value using the peak areas of the Li1s spectrum, the Ni2p spectrum, the spectrum of the element X, and the spectrum of the element M and the sensitivity coefficient of each element.

When X(M)/X(Li) is the above-described lower limit value or more and the above-described upper limit value or less, that is, 0.2 or more and 2.0 or less, it means that an appropriate amount of a compound of Li and the element M is present on the particle surfaces of the lithium metal composite oxide powder. If this would be described using boron as an example of the element M, it means that, in a case where the requirement (2) is satisfied, a lithium boron compound in which lithium and boron have reacted with each other is formed. The lithium boron compound is a compound that is used as an electrolyte for lithium-ion batteries. That is, it means that the lithium boron compound having excellent lithium ion conductivity is formed as a coating material that may come into contact with electrolytic solutions. According to such a lithium metal composite oxide powder of the present embodiment, it is possible to improve the cycle characteristics of lithium secondary batteries.

It can be considered that the lithium metal composite oxide powder of the present embodiment that satisfies the requirements (1) and (2) includes core particles containing a lithium compound and a coating material that coats the surfaces of the core particles. The coating material is a coating layer or coating particles.

The lithium composite metal oxide powder of the present embodiment is preferably represented by the following composition formula (1).

$$Li[Li_{n1}(Ni_{(1-n-w)}X_nM_w)_{1-n1}]O_2 \dots \qquad (I)$$

(The element M is one or more elements selected from the group consisting of B, Si, S, and P.

The element X is one or more elements selected from the group consisting of Co, Mn, Fe, Cu, Ti, Mg, Al, W, Mo, Nb, Zn, Sn, Zr, Ga, and V.

Here, $-0.1 \leq n1 \leq 0.2$, $0 < n \leq 0.8$, $0 < w \leq 0.05$, and $n + w < 1$.)

In the composition formula (I), n1 is preferably more than 0, more preferably 0.01 or more, and particularly preferably 0.02 or more from the viewpoint of improving cycle characteristics. In addition, from the viewpoint of obtaining lithium secondary batteries having a high discharge rate characteristic, n1 is preferably 0.1 or less, more preferably 0.08 or less, and particularly preferably 0.06 or less.

The upper limit value and the lower limit value of n1 can be randomly combined together.

In the present embodiment, $0 < n1 \leq 0.2$ is preferable, and $0 < n1 \leq 0.1$ is more preferable.

In the composition formula (I), from the viewpoint of obtaining lithium secondary batteries having high discharge rate characteristics, $0 < n + w \leq 0.5$ is preferable, $0 < n + w \leq 0.25$ is more preferable, and $0 < n + w \leq 0.2$ is still more preferable.

In the composition formula (I), n is more preferably 0.05 or more and particularly preferably 0.1 or more from the viewpoint of obtaining lithium secondary batteries having a low internal resistance of the battery. In addition, from the viewpoint of obtaining lithium secondary batteries having high thermal stability, n is preferably 0.5 or less and particularly preferably 0.4 or less.

The upper limit value and the lower limit value of n can be randomly combined together.

In the present embodiment, $0 < n \leq 0.5$ is preferable, and $0.1 \leq n \leq 0.5$ is more preferable.

In the composition formula (I), w is preferably 0.001 or more, more preferably 0.004 or more, and particularly preferably 0.01 or more from the viewpoint of improving the cycle characteristics. In addition, w is preferably 0.05 or less, more preferably 0.03 or less, and particularly preferably 0.025 or less.

The upper limit value and the lower limit value of w can be randomly combined together.

In the present embodiment, $0.001 \leq w \leq 0.05$ is preferable, and $0.001 \leq w \leq 0.025$ is more preferable.

The combination of n1, n, and w is preferably $0 < n1 \leq 0.1, 0 < n \leq 0.8$, and $0.001 \leq w \leq 0.05$.

In the composition formula (I), the element M is preferably boron or phosphorus and more preferably boron. The element X is preferably one or more elements selected from the group consisting of Co, Mn, Al, W, Ti, and Zr and more preferably one or more elements selected from the group consisting of Co, Mn, Al, and Zr.

In the present embodiment, the composition formula (I) is preferably the following composition formula (I)-1.

$$Li[Li_{n1}(Ni_{(1-y-z-w)}Co_yQ_zM_w)_{1-n}]O_2 \dots \qquad (I)-1$$

(Here, $-0.1 \leq n1 \leq 0.2$, $0 < y \leq 0.4$, $0 < z \leq 0.4$, $0 < w \leq 0.05$, and $y + z + w < 1$ are satisfied, the element Q is one or more elements selected from the group consisting of Mn, Fe, Cu, Ti, Mg, Al, W, Mo, Nb, Zn, Sn, Zr, Ga, and V, the element X is one or more elements selected from the group consisting of Co, Mn, Fe, Cu, Ti, Mg, Al, W, Mo, Nb, Zn, Sn, Zr, Ga, and V, and the element M is one or more elements selected from the group consisting of B, Si, S, and P.)

From the viewpoint of obtaining a lithium secondary battery having a high discharge capacity, in the composition formula (I)-1, $0 < y + z + w < 0.5$ is preferable, $0 < y + z + w \leq 0.25$ is more preferable, and $0 < y + z + w \leq 0.2$ is still more preferable.

In addition, from the viewpoint of obtaining a lithium secondary battery having a low battery internal resistance, y in the composition formula (I)-1 is preferably 0.005 or more, more preferably 0.01 or more, and still more preferably 0.05 or more. In addition, from the viewpoint of obtaining a lithium secondary battery having high thermal stability, y in the composition formula (I)-1 is more preferably 0.35 or less and still more preferably 0.33 or less.

The upper limit value and the lower limit value of y can be randomly combined together.

In the present embodiment, $0 < y \leq 0.35$ is preferable, and $0.05 \leq y \leq 0.33$ is more preferable.

In addition, from the viewpoint of obtaining a lithium secondary battery having high cycle characteristics, z in the composition formula (I)-1 is preferably 0.01 or more, more preferably 0.02 or more, and still more preferably 0.1 or more. z is preferably 0.39 or less, more preferably 0.38 or less, and still more preferably 0.35 or less.

The upper limit value and the lower limit value of z can be randomly combined together.

In the present embodiment, $0 < z \leq 0.35$ is preferable, and $0.1 \leq z \leq 0.35$ is more preferable.

The composition of the lithium metal composite oxide powder can be analyzed, for example, using an inductively coupled plasma emission spectrometer (for example, SPS3000 manufactured by Seiko Instruments Inc.) after the metal composite oxide powder is dissolved in hydrochloric acid.

In the present embodiment, the lithium atom concentration is indicated by X(Li), the nickel atom concentration is indicated by X(Ni), the atomic concentration of the element X is indicated by X(X), and the atomic concentration of the element M is indicated by X(M) from the peak areas of the Li1s spectrum, the Ni2p spectrum, the spectrum of the element X, and the spectrum of the element M in the XPS measurement, and the atomic concentration of each element on the particle surface of the lithium metal composite oxide is calculated.

X(Ni) can be obtained as a relative value of the Ni element concentration in all of the elements from the peak areas of the Li1s spectrum, the Ni2p spectrum, the spectrum of the element X, and the spectrum of the element M and the sensitivity coefficient of each element.

X(X) can be obtained as a relative value of the concentration of the element X in all of the elements from the peak areas of the Li1s spectrum, the Ni2p spectrum, the spectrum of the element X, and the spectrum of the element M and the sensitivity coefficient of each element.

X(Li) and X(M) are as described above.

The ratio (X(Li)/{X(Ni) + X(X)}) of the atomic concentration of lithium to the total atomic concentration of nickel and element X is preferably 1.0 or more and 5.0 or less, more preferably 1.1 or more and 4.0 or less, and particularly preferably 1.2 or more and 3.0 or less.

When (X(Li)/{X(Ni) + X(X)}) is the above-described upper limit value or less and the above-described lower limit value or more, that is, 1.0 or more and 5.0 or less, it means that a number of lithium elements are present on the particle surfaces of the lithium metal composite oxide with respect to the total amount of the Ni element and the element X. In such a case, the desorption and insertion of lithium ions from and into the lithium metal composite oxide are accelerated in the charging and discharging reaction of batteries, and the initial charge and discharge efficiency improves.

The ratio (X(M)/{X(Ni) + X(X)}) of the atomic concentration of the element M to the total atomic concentration of nickel and element X is preferably 0.3 or more and 6.0 or less, more preferably 0.35 or more and 3.6 or less, and particularly preferably 0.4 or more and 2.4 or less.

In the composition formula (I) that represents the composition of the whole particles of the lithium metal composite oxide, the ratio (w/{w + n + (1-n-w)}) of the element M to the total amount of the Ni element, the element M, and the element X becomes equal to the value of w.

That is, in the composition formula (I), when $0 < w \leq 0.05$ is satisfied, and the value of (X(M)/{X(Ni) + X(X)}) is the above-described upper limit value or less and the above-described lower limit value or more, that is, 0.3 or more and 6.0 or less, the value of (X(M)/{X(Ni) + X(X)}) becomes larger than the value of the w. In this case, it means that the element M is appropriately segregated on the particle surfaces of the lithium metal composite oxide.

In the lithium metal composite oxide powder of the present embodiment, the 50% cumulative diameter (average particle diameter $D_{50}$) obtained from a particle size distribution measurement value by a wet method is preferably 2 $\mu$m or more and 20 $\mu$m or less.

The lower limit value of the 50% cumulative diameter ($D_{50}$) is preferably 2 $\mu$m or more, more preferably 2.5 $\mu$m or more, and still more preferably 3 $\mu$m or more.

The upper limit value of the 50% cumulative diameter ($D_{50}$) is preferably 20 $\mu$m or less, more preferably 18 $\mu$m or less, and still more preferably 15 $\mu$m or less.

The upper limit value and the lower limit value of the 50% cumulative diameter ($D_{50}$) can be randomly combined. In the present embodiment, the 50% cumulative diameter ($D_{50}$) is preferably 2 $\mu$m or more and 20 $\mu$m or less, more preferably 2.5 $\mu$m or more and 18 $\mu$m or less, and still more preferably 2.5 $\mu$m or more and 15 $\mu$m or less.

The 50% cumulative diameter ($D_{50}$) by the wet method can be measured as follows.

0.1 g of the lithium metal composite oxide powder is put into 50 ml of 0.2 mass% sodium hexametaphosphate aqueous solution to obtain a dispersion liquid in which the powder is dispersed. The particle size distribution of the obtained dispersion liquid is measured using a laser diffraction scattering particle size distribution measuring device (for example, MS 2000 manufactured by Malvern Panalytical Ltd.) to obtain a volume-based cumulative particle size distribution curve. In the obtained cumulative particle size distribution curve, the volume particle size at the time of 50% accumulation is defined as $D_{50}$, which is the 50% cumulative volume particle size of the lithium metal composite oxide powder.

(Layered structure)

In the present embodiment, the crystal structure of the lithium metal composite oxide powder is a layered structure and more preferably a hexagonal crystal structure or a monoclinic crystal structure.

The hexagonal crystal structure belongs to any one space group selected from the group consisting of P3, $P3_1$, $P3_2$, R3, P-3, R-3, P312, P321, $P3_1$12, $P3_1$21, $P3_2$12, $P3_2$21, R32, P3m1, P31m, P3c1, P31c, R3m, R3c, P-31m, P-31c, P-3ml, P-3c1, R-3m, R-3c, P6, $P6_1$, $P6_5$, $P6_2$, $P6_4$, $P6_3$, P-6, P6/m, $P6_3$/m, P622, $P6_1$22, $P6_5$22, $P6_2$22, $P6_4$22, P6322, P6mm, P6cc, $P6_3$cm, $P6_3$mc, P-6m2, P-6c2, P-62m, P-62c, P6/mmm, P6/mcc, $P6_3$/mcm, and $P6_3$/mmc.

In addition, the monoclinic crystal structure belongs to any one space group selected from the group consisting of P2, $P2_1$, C2, Pm, Pc, Cm, Cc, P2/m, $P2_1$/m, C2/m, P2/c, $P2_1$/c, and C2/c.

Among these, in order to obtain a lithium secondary battery having a high discharge capacity, the crystal structure is particularly preferably a hexagonal crystal structure belonging to the space group R-3m, or a monoclinic crystal structure belonging to C2/m.

<Method for producing lithium metal composite oxide powder>

A method for producing a lithium metal composite oxide powder of the present embodiment includes a step of mixing a precursor of a positive electrode active material for a lithium secondary battery and a lithium compound to obtain a first mixture, a step of calcining the first mixture to obtain a raw material compound, a step of mixing the raw material compound and a compound containing an element M to obtain a second mixture, and a thermal treatment step of heating the second mixture in an oxidizing atmosphere.

In the method for producing a lithium metal composite oxide powder of the present embodiment, the lithium metal composite oxide powder that is obtained after the thermal treatment step is preferably represented by the composition formula (I) and more preferably represented by the composition formula (I)-1.

[Step of obtaining first mixture]

The present step is a step of mixing a lithium compound and the precursor to obtain a first mixture.

• Precursor

In the production of the lithium metal composite oxide powder, first, a precursor of a positive electrode active material for a lithium secondary battery is produced.

The precursor is a composite metal compound containing any one or more metals of nickel and the element X (Co, Mn, Fe, Cu, Ti, Mg, Al, W, Mo, Nb, Zn, Sn, Zr, Ga, and V). As the composite metal compound, a composite metal hydroxide or a composite metal oxide is preferable.

Hereinafter, the precursor of a positive electrode active material for a lithium secondary battery will be referred to as "precursor" or "composite metal compound" in some cases.

(Step of producing composite metal compound)

Usually, the composite metal compound can be produced by a well-known batch coprecipitation method or continuous coprecipitation method. Hereinafter, the production method will be described in detail using a composite metal hydroxide containing nickel, cobalt, and manganese as metals as an example.

First, a nickel salt solution, a cobalt salt solution, a manganese salt solution, and a complexing agent are reacted together by a coprecipitation method, particularly, the continuous method described in Japanese Unexamined Patent Application, First Publication No. 2002-201028, thereby producing a nickel cobalt manganese composite metal hydroxide.

A nickel salt that is a solute of the nickel salt solution is not particularly limited, and, for example, any of nickel sulfate, nickel nitrate, nickel chloride, and nickel acetate can be used. As a cobalt salt that is a solute of the cobalt salt solution, for example, any of cobalt sulfate, cobalt nitrate, and cobalt chloride can be used. As a manganese salt that is a solute of the manganese salt solution, for example, any of manganese sulfate, manganese nitrate, and manganese chloride can be used.

The above metal salts are used in proportions corresponding to the composition ratio of Formula (I)-1. That is, the nickel salt, the cobalt salt, and the manganese salt are used in proportions of (1-y-z):y:z. In addition, as the solvents of the nickel salt solution, the cobalt salt solution, and the manganese salt solution, water is used.

The complexing agent is an agent capable of forming a complex with ions of nickel, cobalt, and manganese in aqueous solutions. Examples of the complexing agent include ammonium ion feeders (ammonium sulfate, ammonium chloride, ammonium carbonate, ammonium fluoride, and the like), hydrazine, ethylenediaminetetraacetic acid, nitrilotriacetic acid, uracil diacetic acid, and glycine.

In the batch coprecipitation method or continuous coprecipitation method, an alkali metal hydroxide (for example, sodium hydroxide or potassium hydroxide) is added as necessary in order to adjust the pH value of the aqueous solution.

At the time of the reaction, the temperature of the reaction vessel is controlled in a range of, for example, 20°C or higher and 80°C or lower and preferably 30°C or higher and 70°C or lower.

The pH value in the reaction vessel is controlled within a range of, for example, pH 9 or higher and pH 13 or lower and preferably pH 10 or higher and pH 12.5 or lower when the temperature of the aqueous solution is 40°C.

The substances in the reaction vessel are appropriately stirred. When the temperature of the reaction vessel is maintained at 40°C or higher and the individual solutions are mixed and stirred under a condition that the ratio of the mass of nickel, cobalt, or manganese as a metal to the mass of the alkali metal hydroxide becomes 0.9 or higher, it is possible to control the particle diameter ($D_{50}$) of the nickel cobalt manganese composite metal hydroxide. As the reaction vessel, it is possible to use a reaction vessel in which the formed reaction precipitate is caused to overflow for separation.

In addition, in the reaction vessel, an appropriate oxygen-containing atmosphere or an oxidizing agent may be present while maintaining an inert atmosphere. In order to create an oxygen-containing atmosphere in the reaction vessel, an oxygen-containing gas may be introduced into the reaction vessel.

As the oxygen-containing gas, oxygen gas, air, or a gas mixture of oxygen gas, air and an oxygen-free gas such as nitrogen gas are exemplary examples. Among these gases, the gas mixture is preferable from the viewpoint of easiness in adjusting the oxygen concentration in the oxygen-containing gas.

When the concentrations, stirring speed, reaction temperature, and reaction pHs of the metal salts that are supplied to the reaction vessel, calcining conditions, which will be described below, and the like are appropriately controlled, it is possible to control a positive electrode active material for a lithium secondary battery to be obtained in the end to desired physical properties.

After the above-described reaction, the obtained reaction precipitate is washed with water and then dried, thereby isolating a nickel cobalt manganese composite hydroxide as a nickel cobalt manganese composite compound. In addition, the reaction precipitate may be washed with a weak acid water or an alkaline solution containing sodium hydroxide or potassium hydroxide as necessary. It should be noted that, in the above-described example, the nickel cobalt manganese composite hydroxide has been produced as a precursor, but a nickel cobalt manganese composite oxide may be prepared. For example, a nickel cobalt manganese composite oxide can be prepared by heating the nickel cobalt manganese composite hydroxide in an oxidizing atmosphere. Regarding the heating time, the total time taken while the temperature begins to be raised and reaches the heating temperature and the holding of the composite metal hydroxide at the heating temperature ends is preferably set to one hour or longer and 30 hours or shorter. The temperature rising rate in the heating step until the highest holding temperature is reached is preferably 180 °C/hour or faster, more preferably 200 °C/hour or faster, and particularly preferably 250 °C/hour or faster. Air or oxygen is preferably used as the gas that forms the oxidizing atmosphere.

At the time of adjusting a composite oxide of nickel and the element X from a composite hydroxide of nickel and the element X (as a specific example of the description herein, the nickel cobalt manganese composite hydroxide), an oxide production step of producing an oxide by heating the composite hydroxide at a temperature of 300°C or higher and 800°C or lower in a range of one hour or longer and 10 hours or shorter may be carried out.

• Lithium compound

As the lithium compound that is used in the present invention, it is possible to use any one of lithium carbonate, lithium nitrate, lithium acetate, lithium hydroxide, lithium oxide, lithium chloride, and lithium fluoride or a mixture of two or more thereof. Among these, any one or both of lithium hydroxide and lithium carbonate are preferable.

In a case where lithium hydroxide contains lithium carbonate as an impurity, the content of lithium carbonate in lithium hydroxide is preferably 5 mass% or less.

The method for mixing the precursor and the lithium compound will be described.

The precursor is dried and then mixed with the lithium compound. The drying conditions are not particularly limited, and, for example, any of the following drying conditions 1) to 3) is an exemplary example.

1) Condition under which precursor is not oxidized and reduced. Specifically, a drying condition under which an oxide remains as an oxide as it is or a drying condition under which a hydroxide remains as a hydroxide as it is.
2) Condition under which precursor is oxidized. Specifically, a drying condition under which a hydroxide is oxidized to an oxide.
3) Condition under which precursor is reduced. Specifically, a drying condition under which an oxide is reduced to a hydroxide.

In order to form the condition under which the precursor is not oxidized and reduced, an inert gas such as nitrogen, helium, or argon may be used, and, under the condition under which a hydroxide is oxidized, oxygen or an air may be used.

In addition, under the condition under which the precursor is reduced, a reducing agent such as hydrazine or sodium sulfite may be used in an inert gas atmosphere.

After the precursor is dried, the precursor may be appropriately classified.

The above-described lithium compound and precursor are mixed in consideration of the composition ratio of a final target product. For example, the precursor is mixed with the lithium compound such that the ratio of the number of lithium atoms to the number of metal atoms that are contained in the composite metal oxide or composite metal hydroxide becomes more than 1.0. That is, the lithium compound and the nickel cobalt manganese composite hydroxide are mixed such that the mole ratio between lithium and the total of metal elements other than lithium (the total of nickel and the element X) becomes a ratio of more than one.

The ratio of the number of lithium atoms to the number of metal atoms is preferably 1.05 or more and more preferably 1.10 or more. Further, the ratio is preferably 1.30 or less and more preferably 1.20 or less. The upper limit value and the lower limit value of the ratio of the number of lithium atoms to the number of metal atoms can be randomly combined and may be, for example, 1.05 or more and 1.30 or less or 1.10 or more and 1.20 or less.

When the first mixture, which is a mixture of the precursor and the lithium compound obtained as described above, is sintered in the subsequent calcining step, a raw material compound that is a lithium-nickel-containing composite metal oxide is obtained.

[Step of obtaining raw material compound]

The present step is a step of calcining the first mixture, which is a mixture of the lithium compound and the precursor obtained in the above-described step, to obtain a raw material compound.

In the calcining, a dry air, an oxygen atmosphere, an inert atmosphere, or the like is used depending on a desired composition, and a plurality of heating steps is carried out as necessary.

The calcining temperature of the precursor and the above-described lithium compound is not particularly limited, but is, for example, preferably 600°C or higher and 1100°C or lower and more preferably 650°C or higher and 1050°C or lower.

When the calcining temperature is equal to or higher than the lower limit value, that is, 600°C or higher, a positive electrode active material for lithium secondary batteries having a strong crystal structure can be obtained. When the calcining temperature is equal to or lower than the upper limit value, that is 1100°C or lower, volatilization of lithium on the surface of the secondary particles can be reduced.

In the present specification, the calcining temperature means the temperature of the atmosphere in a calcining furnace and means the highest temperature of the holding temperatures in a main calcining step (hereinafter, referred to as the highest holding temperature in some cases). In a case of the main calcining step having a plurality of heating steps, the calcining temperature means a temperature at the time of heating the precursor and the liquid compound at the highest holding temperature in each of the heating steps.

The calcining time is preferably three hours or longer and 50 hours or shorter. When the calcining time exceeds 50 hours, there is a tendency that the battery performance substantially deteriorates due to the volatilization of lithium. When the calcining time is shorter than three hours, the development of crystals is poor, and there is a tendency that the battery performance becomes poor. It should be noted that it is also effective to carry out preliminary calcining before the above-described calcining. The temperature of the preliminary calcining is within a range of 300°C or higher and 850°C or lower, and the preliminary calcining is preferably carried out for one hour or longer and 10 hours or shorter.

In the present embodiment, the temperature rising rate in the heating step in which the highest holding temperature is reached is preferably 80 °C/hour or faster, more preferably 100 °C/hour or faster, and particularly preferably 150 °C/hour or faster.

The temperature rising rate in the heating step in which the highest holding temperature is reached is calculated from the time taken while the temperature begins to be raised and then reaches a holding temperature to be described below in a calcining device.

The calcining step preferably has a plurality of heating steps that are carried out at different calcining temperatures. For example, the calcining step preferably has a first calcining stage and a second calcining stage of calcining the precursor and the lithium compound at a higher temperature than in the first calcining stage. Furthermore, the calcining step may have a calcining stage that is carried out at a different calcining temperature for a different calcining time.

When the first mixture is sintered as described above, the raw material compound can be obtained.

[Step of adding compound containing element M and obtaining second mixture]

In the present embodiment, the compound containing the element M is a powder-form compound containing the element M. The BET specific surface area of the compound containing the element M is 0.14 $m^2$/g or more and 2.0 $m^2$/g or less. The BET specific surface area of the compound containing the element M is more preferably 0.2 $m^2$/g or more and 1.8 $m^2$/g or less and particularly preferably 0.3 $m^2$/g or more and 1.6 $m^2$/g or less.

When the BET specific surface area of the compound containing the element M is 0.14 $m^2$/g or more and 2.0 $m^2$/g or less, the compound of the element M is likely to fuse to the raw material compound, which is a powder, in a case where the compound of the element M has melted in the thermal treatment step to be described below. In this case, in the thermal treatment step to be described below, it is possible to prevent the compound containing the element M from being fixed to the inner wall of a thermal treatment container when the compound has melted.

In the present embodiment, when the BET specific surface area of the raw material compound is indicated by S1 and the BET specific surface area of the compound containing the element M is indicated by S2, the ratio of S1 to S2 (S1/S2) is preferably 0.2 or more and 10 or less, more preferably 0.3 or more and 6 or less, and particularly preferably 0.4 or more and 3 or less.

The BET specific surface area of the compound containing the element M can be obtained by carrying out measurement using, for example, a BET specific surface area meter (for example, Macsorb (registered trademark) manufactured by Mountech Co., Ltd.) (unit: $m^2$/g).

In the present embodiment, the average particle diameter $D_{50}$ of the compound containing the element M is preferably more than 1 $\mu$m and 200 $\mu$m or less.

Since the compound containing the element M is a water-soluble compound, the average particle diameter $D_{50}$ is measured by a dry method. Specifically, the dry-type particle size distribution is measured with a laser diffraction particle size distribution meter (for example, MS 2000 manufactured by Malvern Panalytical Ltd.) using 2 g of the powder of the compound containing the element M, and a volume-based cumulative particle size distribution curve is obtained. In the cumulative particle size distribution curve, the value of the particle diameter at the time of 50% accumulation is defined as the average particle diameter $D_{50}$.

The compound containing the element M is preferably a solid having a melting point of 550°C or lower, and, specifically, $Na_2S_2O_3 \cdot 5H_2O$, $S_8$, $H_4P_2O_7$, $Na_4P_2O_7 \cdot 10H_2O$, $H_3BO_3$, $C_6H_{18}O_3Si_3$, $HBO_2$, $B_2O_3$, and the like are exemplary examples. The compound containing the element M may contain an alkali metal element or an alkaline earth metal element, and, when the alkali metal element or the alkaline earth metal element is defined as the element A, the mole ratio A/M of the element A to the element M is preferably 2 or less, A/M is more preferably 1 or less, and A/M is particularly preferably 0. The kind of the element M is preferably phosphorus and boron and particularly preferably boron.

The amount of the compound containing the element M mixed is preferably more than 0 mol% and 5 mol% or less, preferably 0.002 mol% or more and 4 mol% or less, more preferably 0.03 mol% or more and 3 mol% or less, and particularly preferably 0.04 mol% or more and less than 2 mol% with respect to the total amount (100 mol%) of the amount of the raw material compound obtained in the above-described step charged. Here, "the total amount of the raw material compound" indicates the total amount of nickel and the element X.

[Thermal treatment step]

After the compound containing the element M and the raw material compound are mixed together, the second mixture is thermally treated in an atmosphere of a dehumidified oxidative gas. Air or oxygen is preferable as the kind of the oxidative gas. As the index of the humidity of the gas, the dew point is preferably -10°C or lower, more preferably -20°C or lower, and particularly preferably -30°C or lower.

The thermal treatment is preferably carried out for one hour or longer and 10 hours or shorter. In the present embodiment, the thermal treatment temperature is preferably a temperature lower than the calcining temperature. The thermal treatment temperature is preferably 250°C or higher and 550°C or lower, more preferably 270°C or higher and 530°C or lower, still more preferably 290°C or higher and 510°C or lower, and particularly preferably 300°C or higher and 500°C or lower.

The thermal treatment temperature may be appropriately adjusted depending on the amount of the compound containing the element M mixed. As the combination of the amount of the compound containing the element M mixed and the calcining temperature, in a case where the amount of the compound containing the element M mixed is 0.015 mol% or less with respect to the total amount (100 mol%) of the amount of the raw material compound charged, the thermal treatment temperature is preferably set to higher than 250°C and 500°C or lower, and, in a case where the amount of the compound containing the element M mixed is more than 0.015 mol% with respect to the total amount (100 mol%) of the amount of the raw material compound charged, the thermal treatment temperature is preferably set to higher than 400°C and 500°C or lower.

When the BET specific surface area of the compound containing the element M is set to the lower limit value or more and the upper limit value or less and the thermal treatment temperature is controlled to be within the above-described range, it is possible to adjust the lithium metal composite oxide powder of the present embodiment to be within the ranges of the requirements (1) to (2).

A facility that is used in the thermal treatment step is not particularly limited and may be a batch-type facility or a continuous-type facility. Furthermore, the method for obtaining the lithium metal composite oxide powder may be a fixed bed method in which the thermal treatment is carried out while the powder is left or a fluidized bed method in which the thermal treatment is carried out while the powder is caused to flow.

In order to increase the amount of the thermally treated powder per unit time, a facility with which the thermal treatment is carried out in a continuous and fluidized manner is preferable, as a typical facility, a rotary kiln, a fluidized bed calcining furnace, a paddle dryer, or the like can be used, and, among these, a rotary kiln is preferred.

[Optional step]

• Washing step

In the present embodiment, the lithium metal composite oxide powder after the thermal treatment is preferably washed using pure water, an alkaline washing liquid, or the like as a washing liquid.

As the alkaline washing liquid, for example, aqueous solutions of one or more anhydrides selected from the group consisting of LiOH (lithium hydroxide), NaOH (sodium hydroxide), KOH (potassium hydroxide), $Li_2CO_3$ (lithium carbonate), $Na_2CO_3$ (sodium carbonate), $K_2CO_3$ (potassium carbonate), and $(NH_4)_2CO_3$ (ammonium carbonate) and aqueous solutions of a hydrate of the above-described anhydride are exemplary examples. In addition, as an alkali, it is also possible to use ammonia.

In the washing step, as a method for bringing the washing liquid and the lithium metal composite oxide powder into contact with each other, a method in which the lithium metal composite oxide powder is poured into each washing liquid and stirred, a method in which each washing liquid is applied as shower water to the lithium metal composite oxide powder, and a method in which the lithium metal composite oxide powder is poured into the washing liquid and stirred, then, the lithium metal composite oxide powder is separated from each washing liquid, and then each washing liquid is applied as shower water to the separated lithium metal composite oxide powder are exemplary examples.

The temperature of the washing liquid that is used for the washing is preferably 15°C or lower, more preferably 10°C or lower, and still more preferably 8°C or lower. When the temperature of the washing liquid is controlled in the above-described range to a temperature at which the washing liquid does not freeze, it is possible to suppress the excessive elution of lithium ions from the crystal structure of the lithium metal composite oxide powder into the washing liquid during the washing.

• Addition of inert melting agent

In the present embodiment, an inert melting agent may be added in the step of mixing the lithium compound and the precursor to obtain the first mixture.

In a case where the inert melting agent is added and the first mixture is sintered, it is possible to accelerate the reaction between the lithium compound and the precursor. The inert melting agent may remain in the sintered lithium metal composite oxide powder or may be removed by washing the mixture with a washing liquid after the calcining. In the present embodiment, the sintered lithium metal composite oxide powder is preferably washed using pure water or the washing liquid such as an alkaline washing liquid in the presence of the inert melting agent.

In the present embodiment, even in the case of adding the inert melting agent in the step of obtaining the first mixture, the calcining temperature and the total time may be appropriately adjusted within the above-described ranges.

The inert melting agent that can be used in the present embodiment is not particularly limited as long as the inert melting agent does not easily react with the mixture during the calcining. In the present embodiment, one or more selected from the group consisting of a fluoride of one or more elements selected from the group consisting of Na, K, Rb, Cs, Ca, Mg, Sr, and Ba (hereinafter, referred to as "A"), a chloride of A, a carbonate of A, a sulfate of A, a nitrate of A, a phosphate of A, a hydroxide of A, a molybdate of A, and A of tungstate are exemplary examples.

As the fluoride of A, NaF (melting point: 993°C), KF (melting point: 858°C), RbF (melting point: 795°C), CsF (melting point: 682°C), $CaF_2$ (melting point: 1402°C), $MgF_2$ (melting point: 1263°C), $SrF_2$ (melting point: 1473°C), and $BaF_2$(melting point: 1355°C) can be exemplary examples.

As the chloride of A, NaCl (melting point: 801°C), KCl (melting point: 770°C), RbCl (melting point: 718°C), CsCl (melting point: 645°C), $CaCl_2$ (melting point: 782°C), $MgCl_2$ (melting point: 714°C), $SrCl_2$ (melting point: 857°C), and $BaCl_2$(melting point: 963°C) can be exemplary examples.

As the carbonate of A, $Na_2CO_3$ (melting point: 854°C), $K_2CO_3$ (melting point: 899°C), $Rb_2CO_3$ (melting point: 837°C), $CS_2CO_3$ (melting point: 793°C), $CaCO_3$ (melting point: 825°C), $MgCO_3$ (melting point: 990°C), $SrCO_3$ (melting point: 1497°C), and $BaCO_3$ (melting point: 1380°C) can be exemplary examples.

As the sulfate of A, $Na_2SO_4$ (melting point: 884°C), $K_2SO_4$ (melting point: 1069°C), $Rb_2SO_4$ (melting point: 1066°C), $CS_2SO_4$ (melting point: 1005°C), $CaSO_4$ (melting point: 1460°C), $MgSO_4$ (melting point: 1137°C), $SrSO_4$ (melting point: 1605°C), and $BaSO_4$ (melting point: 1580°C) can be exemplary examples.

As the nitrate of A, $NaNO_3$ (melting point: 310°C), $KNO_3$ (melting point: 337°C), $RbNO_3$ (melting point: 316°C), $CsNO_3$ (melting point: 417°C), $Ca(NO_3)_2$ (melting point: 561°C), $Mg(NO_3)_2$, $Sr(NO_3)_2$ (melting point: 645°C), and $Ba(NO_3)_2$ (melting point: 596°C) can be exemplary examples.

As the phosphate of A, $Na3PO_4$, $K_3PO_4$ (melting point: 1340°C), $Rb_3PO_4$, $Cs_3PO_4$, $Ca_3(PO_4)_2$, $Mg_3(PO_4)_2$, (melting point: 1184°C), $Sr_3(PO_4)_2$ (melting point: 1727°C), and $Ba_3(PO_4)_2$ (melting point: 1767°C) can be exemplary examples.

As the hydroxide of A, $NaOH$ (melting point: 318°C), $KOH$ (melting point: 360°C), $RbOH$ (melting point: 301°C), $CsOH$ (melting point: 272°C), $Ca(OH)_2$ (melting point: 408°C), $Mg(OH)_2$ (melting point: 350°C), $Sr(OH)_2$ (melting point: 375°C), and $Ba(OH)_2$ (melting point: 853°C) can be exemplary examples.

As the molybdate of A, $Na_2MoO_4$ (melting point: 698°C), $K_2MoO_4$ (melting point: 919°C), $Rb_2MoO_4$ (melting point: 958°C), $Cs_2MoO_4$ (melting point: 956°C), $CaMoO_4$ (melting point: 1520°C), $MgMoO_4$ (melting point: 1060°C), $SrMoO_4$ (melting point: 1040°C), and $BaMoO_4$ (melting point: 1460°C) can be exemplary examples.

As the tungstate of A, $Na_2WO_4$ (melting point: 687°C), $K_2WO_4$, $Rb_2WO_4$, $Cs_2WO_4$, $CaWO_4$, $MgWO_4$, $SrWO_4$, and $BaWO_4$ can be exemplary examples.

In the present embodiment, it is also possible to use two or more of these inert melting agents. In the case of using two or more inert melting agents, there are cases where the melting point decreases. In addition, among these inert melting agents, as an inert melting agent for obtaining a lithium metal composite oxide powder having higher crystallinity, any of the carbonate of A, the sulfate of A, and the chloride of A or a combination thereof is preferable. In addition, A is preferably any one or both of sodium (Na) and potassium (K). That is, among the above-described inert melting agents, a particularly preferable inert melting agent is one or more selected from the group consisting of NaOH, KOH, NaCl, KCl, $Na_2CO_3$, $K_2CO_3$, $Na_2SO_4$, and $K_2SO_4$.

In the present embodiment, potassium sulfate or sodium sulfate is preferable as the inert melting agent.

In the present embodiment, even in the case of adding the inert melting agent in the step of obtaining the first mixture, the washing may be appropriately adjusted within the above-described range.

• Crushing step

The raw material mixture to be mixed with the compound of element M and a lithium transition metal composite oxide after the thermal treatment step may be crushed. When the raw material mixture and the lithium metal composite oxide are crushed, it is possible to improve the yield of particles after classification at the time of a classification step, which will be described below. The crushing step is preferably carried out using a pin mill. In the crushing step in which the pin mill is used as an example, the rotation speed of the pin mill is preferably 5000 rpm or faster and more preferably 10000 rpm or faster.

• Classification step

The obtained lithium metal composite oxide powder is appropriately classified, and made into a positive electrode active material for a lithium secondary battery applicable to lithium secondary batteries.

The positive electrode active material for a lithium secondary battery in the present embodiment contains the lithium metal composite oxide powder obtained above.

<Lithium secondary battery>

Next, the configuration of a lithium secondary battery that is suitable as an application of the positive electrode active material of the present embodiment will be described.

Furthermore, a positive electrode that is suitable as an application of a positive electrode active material for a lithium secondary battery containing the positive electrode active material powder of the present embodiment will be described.

Furthermore, a lithium secondary battery that is suitable as an application of the positive electrode will be described.

An example of the lithium secondary battery that is suitable as an application of the positive electrode active material of the present embodiment has a positive electrode, a negative electrode, a separator interposed between the positive electrode and the negative electrode, and an electrolytic solution disposed between the positive electrode and the negative electrode.

An example of the lithium secondary battery has a positive electrode, a negative electrode, a separator interposed between the positive electrode and the negative electrode, and an electrolytic solution disposed between the positive electrode and the negative electrode.

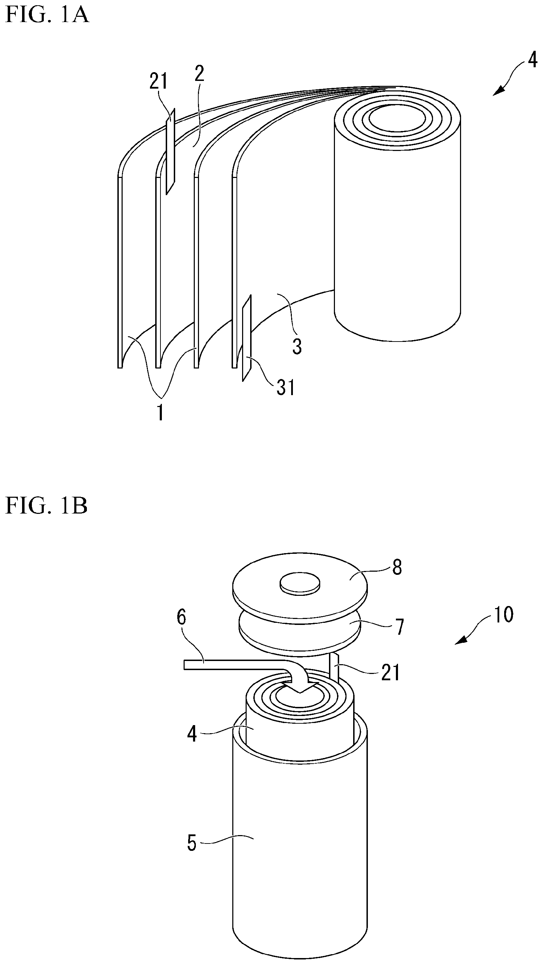

Fig. 1A and Fig. 1B are schematic views showing an example of a lithium secondary battery. A cylindrical lithium secondary battery 10 of the present embodiment is produced as described below.

First, as shown in Fig. 1A, a pair of separators 1 having a strip shape, a strip-shaped positive electrode 2 having a positive electrode lead 21 at one end, and a strip-shaped negative electrode 3 having a negative electrode lead 31 at one end are laminated in order of the separator 1, the positive electrode 2, the separator 1, and the negative electrode 3 and are wound to form an electrode group 4.

Next, as shown in Fig. 1B, the electrode group 4 and an insulator, not shown, are accommodated in a battery can 5, and then the can bottom is sealed. The electrode group 4 is impregnated with an electrolytic solution 6, and an electrolyte is disposed between the positive electrode 2 and the negative electrode 3. Furthermore, the upper portion of the battery can 5 is sealed with a top insulator 7 and a sealing body 8, whereby the lithium secondary battery 10 can be produced.

As the shape of the electrode group 4, for example, a columnar shape in which the cross-sectional shape becomes a circle, an ellipse, a rectangle, or a rectangle with rounded corners when the electrode group 4 is cut in a direction perpendicular to the winding axis is an exemplary example.

In addition, as a shape of the lithium secondary battery having the electrode group 4, a shape specified by IEC60086, which is a standard for a battery specified by the International Electrotechnical Commission (IEC), or by JIS C 8500 can be adopted. For example, shapes such as a cylindrical type and a square type can be exemplary examples.

Furthermore, the lithium secondary battery is not limited to the winding-type configuration and may be a laminate-type configuration in which the laminated structure of the positive electrode, the separator, the negative electrode, and the separator is repeatedly overlaid. As the laminate-type lithium secondary battery, a so-called coin-type battery, button-type battery, or paper-type (or sheet-type) battery can be an exemplary example.

Hereinafter, each configuration will be described in order.

(Positive electrode)

The positive electrode can be produced by, first, adjusting a positive electrode mixture containing a positive electrode active material, a conductive material, and a binder and supporting the positive electrode mixture by a positive electrode current collector.

(Conductive material)

As the conductive material in the positive electrode, a carbon material can be used. As the carbon material, graphite powder, carbon black (for example, acetylene black), a fibrous carbon material, and the like can be exemplary examples. Since carbon black is fine particles and has a large surface area, the addition of a small amount of carbon black to the positive electrode mixture enhances the conductivity inside the positive electrode and is thus capable of improving the charge and discharge efficiency and output characteristics. However, when the carbon black is added too much, both the binding force between the positive electrode mixture and the positive electrode current collector and the binding force inside the positive electrode mixture by the binder decrease, which conversely causes an increase in internal resistance.

The ratio of the conductive material to the positive electrode mixture is preferably 5 parts by mass or more and 20 parts by mass or less with respect to 100 parts by mass of the positive electrode active material. In the case of using a fibrous carbon material such as a graphitized carbon fiber or a carbon nanotube as the conductive material, it is also possible to decrease the ratio thereof.

(Binder)

As the binder in the positive electrode, a thermoplastic resin can be used. As this thermoplastic resin, fluororesins such as polyvinylidene fluoride (hereinafter, referred to as PVdF in some cases), polytetrafluoroethylene (hereinafter, referred to as PTFE in some cases), tetrafluoroethylene-hexafluoropropylene-vinylidene fluoride-based copolymers, hexafluoropropylene-vinylidene fluoride-based copolymers, and tetrafluoroethylene-perfluorovinyl ether-based copolymers; and polyolefin resins such as polyethylene and polypropylene can be exemplary examples.

Two or more of these thermoplastic resins may be used in a mixture form. When a fluororesin and a polyolefin resin are used as the binder, the ratio of the fluororesin to the entire positive electrode mixture is set to 1 mass% or more and 10 mass% or less, and the ratio of the polyolefin resin is set to 0.1 mass% or more and 2 mass% or less, whereby it is possible to obtain a positive electrode mixture having both a high adhesive force to the positive electrode current collector and a high bonding force inside the positive electrode mixture.

(Positive electrode current collector)

As the positive electrode current collector in the positive electrode, a strip-shaped member formed of a metal material such as Al, Ni, or stainless steel as a forming material can be used. Among these, from the viewpoint of easy processing and low costs, a positive electrode current collector that contains Al as the forming material and is processed into a thin film shape is preferable.

As a method for supporting the positive electrode mixture by the positive electrode current collector, a method in which the positive electrode mixture is formed by pressurization on the positive electrode current collector is an exemplary example. In addition, the positive electrode mixture may be supported by the positive electrode current collector by preparing a paste of the positive electrode mixture using an organic solvent, applying and drying the paste of the positive electrode mixture to be obtained on at least one surface side of the positive electrode current collector, and fixing the positive electrode mixture by pressing.

As the organic solvent that can be used in the case of preparing the paste of the positive electrode mixture, an amine-based solvent such as N,N-dimethylaminopropylamine or diethylenetriamine; an ether-based solvent such as tetrahydrofuran; a ketone-based solvent such as methyl ethyl ketone; an ester-based solvent such as methyl acetate; and an amide-based solvent such as dimethylacetamide or N-methyl-2-pyrrolidone (hereinafter, referred to as NMP in some cases) are exemplary examples.

As a method for applying the paste of the positive electrode mixture to the positive electrode current collector, for example, a slit die coating method, a screen coating method, a curtain coating method, a knife coating method, a gravure coating method, and an electrostatic spraying method are exemplary examples.

The positive electrode can be produced by the method exemplified above.

(Negative electrode)

The negative electrode in the lithium secondary battery needs to be a material which can be doped with lithium ions and from which lithium ions can be de-doped at a potential lower than that of the positive electrode, and an electrode in which a negative electrode mixture containing a negative electrode active material is supported by a negative electrode current collector and an electrode formed of a negative electrode active material alone are exemplary examples.

(Negative electrode active material)

As the negative electrode active material in the negative electrode, materials which are a carbon material, a chalcogen compound (oxide, sulfide, or the like), a nitride, a metal, or an alloy and which can be doped with lithium ions and from which lithium ions can be de-doped at a potential lower than that of the positive electrode are exemplary examples.

As the carbon material that can be used as the negative electrode active material, graphite such as natural graphite or artificial graphite, cokes, carbon black, pyrolytic carbons, a carbon fiber, and a sintered product of an organic polymer compound can be exemplary examples.

As the oxide that can be used as the negative electrode active material, oxides of silicon represented by a formula $SiO_x$ (here, x is a positive real number) such as $SiO_2$ and SiO; oxides of titanium represented by a formula $TiO_x$ (here, x is a positive real number) such as $TiO_2$ and TiO; oxides of vanadium represented by a formula $VO_x$ (here, x is a positive real number) such as $V_2O_5$ and $VO_2$; oxides of iron represented by a formula $FeO_x$ (here, x is a positive real number) such as $Fe_3O_4$, $Fe_2O_3$, and FeO; oxides of tin represented by a formula $SnO_x$ (here, x is a positive real number) such as $SnO_2$ and SnO; oxides of tungsten represented by a general formula $WO_x$ (here, x is a positive real number) such as $WO_3$ and $WO_2$; and composite metal oxides containing lithium and titanium or vanadium such as $Li_4Ti_5O_{12}$ and $LiVO_2$ can be exemplary examples.

As the sulfide that can be used as the negative electrode active material, sulfides of titanium represented by a formula $TiS_x$ (here, x is a positive real number) such as $Ti_2S_3$, $TiS_2$, and TiS; sulfides of vanadium represented by a formula $VS_x$ (here, x is a positive real number) such $V_3S_4$, $VS_2$, and VS; sulfides of iron represented by a formula $FeS_x$ (here, x is a positive real number) such as $Fe_3S_4$, $FeS_2$, and FeS; sulfides of molybdenum represented by a formula $MoS_x$ (here, x is a positive real number) such as $Mo_2S_3$ and $MoS_2$; sulfides of tin represented by a formula $SnS_x$ (here, x is a positive real number) such as $SnS_2$ and SnS; sulfides of tungsten represented by a formula $WS_x$ (here, x is a positive real number) such as $WS_2$; sulfides of antimony represented by a formula $SbS_x$ (here, x is a positive real number) such as $Sb_2S_3$; and sulfides of selenium represented by a formula $SeS_x$ (here, x is a positive real number) such as

$Se_5S_3$, $SeS_2$, and $SeS$ can be exemplary examples.

As the nitride that can be used as the negative electrode active material, lithium-containing nitrides such as $Li_3N$ and $Li_{3-x}A_xN$ (here, A is any one or both of Ni and Co, and $0 < x < 3$) can be exemplary examples.

These carbon materials, oxides, sulfides, and nitrides may be used singly or two or more thereof may be jointly used. In addition, these carbon materials, oxides, sulfides, and nitrides may be crystalline or amorphous.

In addition, as the metal that can be used as the negative electrode active material, lithium metal, silicon metal, tin metal, and the like can be exemplary examples.

As the alloy that can be used as the negative electrode active material, lithium alloys such as Li-Al, Li-Ni, Li-Si, Li-Sn, and Li-Sn-Ni; silicon alloys such as Si-Zn; tin alloys such as Sn-Mn, Sn-Co, Sn-Ni, Sn-Cu, and Sn-La; and alloys such as $Cu_2Sb$ and $La_3Ni_2Sn_7$ can also be exemplary examples.

These metals and alloys are used mainly singly as an electrode after being processed into, for example, a foil shape.

Among the above-described negative electrode active materials, the carbon material containing graphite such as natural graphite or artificial graphite as a main component is preferably used for the reason that the potential of the negative electrode rarely changes (the potential flatness is favorable) from a uncharged state to a fully-charged state during charging, the average discharging potential is low, the capacity retention rate at the time of repeatedly charging and discharging the lithium secondary battery is high (the cycle characteristics are favorable), and the like. The shape of the carbon material may be, for example, any of a flaky shape such as natural graphite, a spherical shape such as mesocarbon microbeads, a fibrous shape such as a graphitized carbon fiber, or an aggregate of fine powder.

The negative electrode mixture may contain a binder as necessary. As the binder, thermoplastic resins can be exemplary examples, and specifically, PVdF, thermoplastic polyimide, carboxymethylcellulose, polyethylene, and polypropylene can be exemplary examples.

(Negative electrode current collector)

As the negative electrode current collector in the negative electrode, a strip-shaped member formed of a metal material such as Cu, Ni, or stainless steel as the forming material can be an exemplary example. Particularly, a negative electrode current collector that is formed of Cu as a forming material and processed into a thin film shape is preferable since the negative electrode current collector does not easily produce an alloy with lithium and is easy to process.

As a method for supporting the negative electrode mixture by the negative electrode current collector, similar to the case of the positive electrode, a method in which the negative electrode mixture is formed by pressurization and a method in which a paste of the negative electrode mixture is prepared using a solvent or the like, applied and dried on the negative electrode current collector, and then the negative electrode mixture is compressed by pressing are exemplary examples.

(Separator)

As the separator in the lithium secondary battery, it is possible to use, for example, a material that is made of a material such as a polyolefin resin such as polyethylene or polypropylene, a fluororesin, or a nitrogen-containing aromatic polymer and has a form such as a porous film, a non-woven fabric, or a woven fabric. In addition, the separator may be formed using two or more of these materials or the separator may be formed by laminating these materials.

The air resistance of the separator by the Gurley method specified by JIS P 8117 is preferably 50 sec/100 cc or more and 300 sec/100 cc or less and more preferably 50 sec/100 cc or more and 200 sec/100 cc or less in order to favorably transmit the electrolyte while the battery is in use (while the battery is being charged and discharged).

In addition, the porosity of the separator is preferably 30 vol% or more and 80 vol% or less and more preferably 40 vol% or more and 70 vol% or less with respect to the total volume of the separator. The separator may be a laminate of separators having different porosities.

(Electrolytic solution)

The electrolytic solution in the lithium secondary battery contains an electrolyte and an organic solvent.

As the electrolyte that is contained in the electrolytic solution, lithium salts such as $LiClO_4$, $LiPF_6$, $LiAsF_6$, $LiSbF_6$, $LiBF_4$, $LiCF_3SO_3$, $LiN(SO_2CF_3)_2$, $LiN(SO_2C_2F_5)_2$, $LiN(SO_2CF_3)(COCF_3)$, $Li(C_4F_9SO_3)$, $LiC(SO_2CF_3)_3$, $Li_2B_{10}Cl_{10}$, LiBOB (here, BOB represents bis(oxalato)borate), LiFSI (here, FSI represents bis(fluorosulfonyl)imide), lower aliphatic carboxylic acid lithium salts, and $LiAlCl_4$ are exemplary examples, and a mixture of two or more thereof may be used. Among these, as the electrolyte, at least one selected from the group consisting of $LiPF_6$, $LiAsF_6$, $LiSbF_6$, $LiBF_4$, $LiCF_3SO_3$, $LiN(SO_2CF_3)_2$, and $LiC(SO_2CF_3)_3$, which contain fluorine, is preferably used.

In addition, as the organic solvent that is contained in the electrolytic solution, it is possible to use, for example, carbonates such as propylene carbonate, ethylene carbonate, dimethyl carbonate, diethyl carbonate, ethyl methyl carbonate, 4-trifluoromethyl-1,3-dioxolan-2-one, and 1,2-di(methoxycarbonyloxy)ethane; ethers such as 1,2-dimethoxyethane, 1,3-dimethoxypropane, pentafluoropropyl methyl ether, 2,2,3,3-tetrafluoropropyl difluoromethyl ether, tetrahydrofuran, and 2-methyltetrahydrofuran; esters such as methyl formate, methyl acetate, and γ-butyrolactone; nitriles such as acetonitrile and butyronitrile; amides such as N,N-dimethylformamide and N,N-dimethylacetamide; carbamates such as 3-methyl-2-oxazolidone; sulfur-containing compounds such as sulfolane, dimethyl sulfoxide, and 1,3-propanesultone, or these organic solvents into which a fluoro group is further introduced (the organic solvents in which one or more hydrogen atoms in the organic solvent are substituted with a fluorine atom).

As the organic solvent, two or more of the above-described organic solvents are preferably used in a mixture form. Among these, a mixed solvent containing a carbonate is preferable, and a mixed solvent of a cyclic carbonate and a non-cyclic carbonate and a mixed solvent of a cyclic carbonate and an ether are more preferable. As the mixed solvent of a cyclic carbonate and a non-cyclic carbonate, a mixed solvent containing ethylene carbonate, dimethyl carbonate, and ethyl methyl carbonate is preferable. The electrolytic solution for which such a mixed solvent is used has a number of features as follows: the electrolytic solution has a broad operating temperature range, does not easily deteriorate even when the lithium secondary battery is charged and discharged at a high current rate, does not easily deteriorate even after used for a long period of time, and does not easily dissolve even in a case where a graphite material such as natural graphite or artificial graphite is used as an active material for the negative electrode.

Furthermore, as the electrolytic solution, it is preferable to use an electrolytic solution containing a lithium salt containing fluorine such as LiPF6 and an organic solvent having a fluorine substituent in order to enhance the safety of the obtained lithium secondary battery. A mixed solvent containing an ether having a fluorine substituent such as pentafluoropropyl methyl ether or 2,2,3,3-tetrafluoropropyl difluoromethyl ether and dimethyl carbonate is still more preferable since the capacity retention rate is high even when the lithium secondary battery is charged and discharged at a high current rate.

In the lithium secondary battery having the above-described configuration, since the lithium metal composite oxide powder that is produced by the above-described present embodiment is used in the positive electrode active material, it is possible to improve the cycle retention rate of the lithium secondary battery for which the positive electrode active material is used.

In addition, since the positive electrode having the above-described configuration has the positive electrode active material for a lithium secondary battery having the above-described configuration, it is possible to improve the cycle retention rate of the lithium secondary battery.

Furthermore, the lithium secondary battery having the above-described configuration has the above-described positive electrode and thus becomes a secondary battery having a high cycle retention rate.

<All-solid-state lithium secondary battery>

Next, a positive electrode for which a positive electrode active material for a secondary battery according to an aspect of the present invention is used as a positive electrode active material for an all-solid-state lithium secondary battery and an all-solid-state lithium secondary battery having this positive electrode will be described while describing the configuration of the all-solid-state lithium secondary battery.

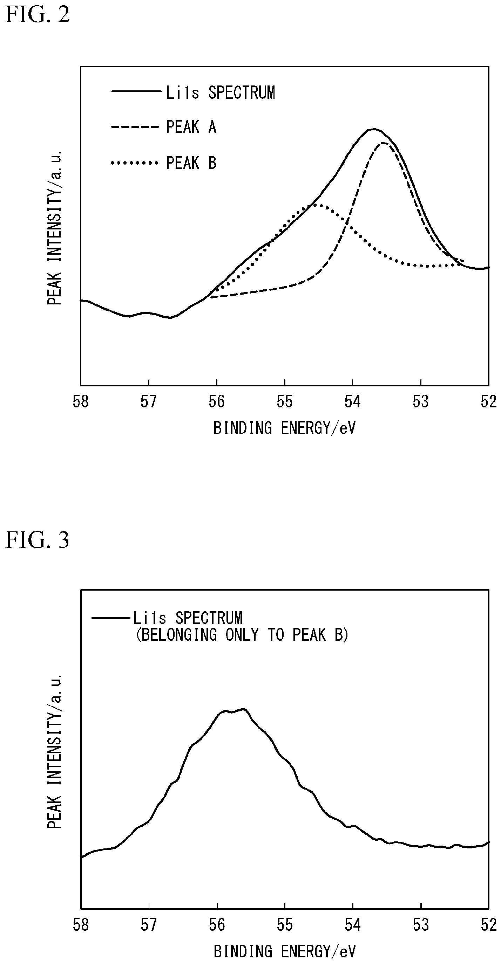

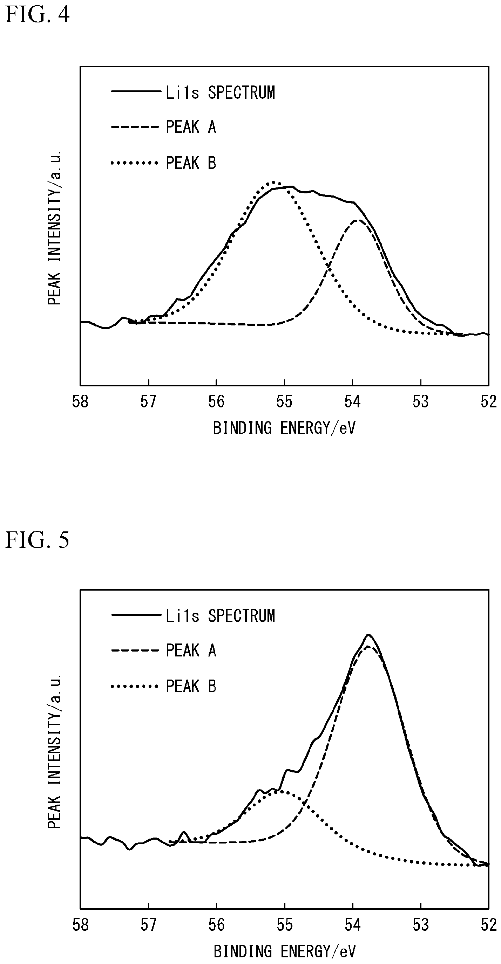

Fig. 3 and Fig. 4 are schematic views showing an example of an all-solid-state lithium secondary battery of the present embodiment. An all-solid-state secondary battery 1000 shown in Fig. 3 and Fig. 4 has a laminate 100 having a positive electrode 110, a negative electrode 120, and a solid electrolyte layer 130 and an exterior body 200 accommodating the laminate 100. A material that configures each member will be described below.

The laminate 100 may have an external terminal 113 that is connected to a positive electrode current collector 112 and an external terminal 123 that is connected to a negative electrode current collector 122. In addition, the all-solid-state secondary battery 1000 may have a separator between the positive electrode 110 and the negative electrode 120.

The all-solid-state secondary battery 1000 further has an insulator, not shown, that insulates the laminate 100 and the exterior body 200 from each other and a sealant, not shown, that seals an opening portion 200a of the exterior body 200.

As the exterior body 200, a container formed of a highly corrosion-resistant metal material such as aluminum, stainless steel or nickel-plated steel can be used. In addition, as the exterior body 200, a container obtained by processing a laminate film having at least one surface on which a corrosion resistant process has been carried out into a bag shape can also be used.

As the shape of the all-solid-state lithium secondary battery 1000, for example, shapes such as a coin type, a button type, a paper type (or a sheet type), a cylindrical type, a square type, and a laminate type (pouch type) can be exemplary examples.

As an example of the all-solid-state secondary battery 1000, a form in which one laminate 100 is provided is shown in the drawings, but the present embodiment is not limited thereto. The all-solid-state secondary battery 1000 may have a configuration in which the laminate 100 is used as a unit cell and a plurality of unit cells (laminates 100) is sealed inside the exterior body 200.

Hereinafter, each configuration will be described in order.

(Positive electrode)

The positive electrode 110 of the present embodiment has a positive electrode active material layer 111 and a positive electrode current collector 112.

The positive electrode active material layer 111 contains the positive electrode active material, which is one aspect of the present invention described above, and a solid electrolyte. In addition, the positive electrode active material layer 111 may contain a conductive material and a binder.

(Solid electrolyte)

As the solid electrolyte that is contained in the positive electrode active material layer 111 of the present embodiment, a solid electrolyte that is lithium ion-conductive and used in well-known all-solid-state batteries can be adopted. As the solid electrolyte, an inorganic electrolyte and an organic electrolyte can be exemplary examples. As the inorganic electrolyte, an oxide-based solid electrolyte, a sulfide-based solid electrolyte, and a hydride-based solid electrolyte can be exemplary examples. As the organic electrolyte, polymer-based solid electrolytes are exemplary examples.

(Oxide-based solid electrolyte)

As the oxide-based solid electrolyte, for example, a perovskite-type oxides, a NASICON-type oxide, a LISICON-type oxide, a garnet-type oxides, and the like are exemplary examples.

As the perovskite-type oxide, Li-La-Ti-based oxides such as $Li_aLa_{1-a}TiO_3$ ($0 < a < 1$), Li-La-Ta-based oxides such as $Li_bLa_{1-b}TaO_3$ ($0 < b < 1$), Li-La-Nb-based oxides such as $Li_cLa_{1-c}NbO_3$ ($0 < c < 1$), and the like are exemplary examples.

As the NASICON-type oxide, $Li_{1+d}Al_dTi_{2-d}(PO_4)_3$ ($0 \leq d \leq 1$) and the like are exemplary examples. The NASICON-type oxide is an oxide represented by $Li_mM^1{}_nM^2{}_oP_pO_q$ (in the formula, $M^1$ is one or more elements selected from the group consisting of B, Al, Ga, In, C, Si, Ge, Sn, Sb, and Se. $M^2$ is one or more elements selected from the group consisting of Ti, Zr, Ge, In, Ga, Sn, and Al. m, n, o, p, and q are random positive numbers).

As the LISICON-type oxide, oxides represented by $Li_4M^3O_4$-$Li_3M^4O_4$ ($M^3$ is one or more elements selected from the group consisting of Si, Ge, and Ti. $M^4$ is one or more elements selected from the group consisting of P, As, and V) and the like are exemplary examples.

As the garnet-type oxide, Li-La-Zr-based oxides such as $Li_7La_3Zr_2O_{12}$ (also referred to as LLZ) are exemplary examples.

The oxide-based solid electrolyte may be a crystalline material or an amorphous material.

(Sulfide-based solid electrolyte)

As the sulfide-based solid electrolyte, $Li_2S$-$P_2S_5$-based compounds, $Li_2S$-$SiS_2$-based compounds, $Li_2S$-$GeS_2$-based compounds, $Li_2S$-$B_2S_3$-based compounds, $Li_2S$-$P_2S_3$-based compounds, $LiI$-$Si_2S$-$P_2S_5$, $LiI$-$Li_2S$-$P_2O_5$, $LiI$-$Li_3PO_4$-$P_2S_5$, $Li_{10}GeP_2S_{12}$, and the like can be exemplary examples.

It should be noted that, in the present specification, the expression "-based compound" that indicates the sulfide-based solid electrolyte is used as a general term for solid electrolytes mainly containing a raw material written before "-based compound" such as "$Li_2S$" and "$P_2S_5$". For example, the $Li_2S$-$P_2S_5$-based compounds include solid electrolytes mainly containing $Li_2S$ and $P_2S_5$a and further containing a different raw material. The proportion of $Li_2S$ that is contained in the $Li_2S$-$P_2S_5$-based compound is, for example, 50 to 90 mass% with respect to the entire $Li_2S$-$P_2S_5$-based compound. The proportion of $P_2S_5$ that is contained in the $Li_2S$-$P_2S_5$-based compound is, for example, 10 to 50 mass% with respect to the entire $Li_2S$-$P_2S_5$-based compound. In addition, the proportion of the different raw material that is contained in the $Li_2S$-$P_2S_5$-based compound is, for example, 0 to 30 mass% with respect to the entire $Li_2S$-$P_2S_5$-based compound. In addition, the $Li_2S$-$P_2S_5$-based compounds also include solid electrolytes containing $Li_2S$ and $P_2S_5$ in different mixing ratios.

As the $Li_2S$-$P_2S_5$-based compounds, $Li_2S$-$P_2S_5$, $Li_2S$-$P_2S_5$-$LiI$, $Li_2S$-$P_2S_5$-$LiCl$, $Li_2S$-$P_2S_5$-$LiBr$, $Li_2S$-$P_2S_5$-$Li_2O$, $Li_2S$-$P_2S_5$-$Li_2O$-$LiI$, $Li_2S$-$P_2S_5$-$Z_mS_n$ (m and n are positive numbers. Z is Ge, Zn, or Ga.), and the like are exemplary examples.

As the $Li_2S$-$SiS_2$-based compounds, $Li_2S$-$SiS_2$, $Li_2S$-$SiS_2$-$LiI$, $Li_2S$-$SiS_2$-$LiBr$, $Li_2S$-$SiS_2$-$LiCl$, $Li_2S$-

$SiS_2$-$B_2S_3$-LiI, $Li_2S$-$SiS_2$-$P_2S_5$-LiI, $Li_2S$-$SiS_2$-$Li_3PO_4$, $Li_2S$-$SiS_2$-$Li_2SO_4$, $Li_2S$-$SiS_2$-$Li_xMO_y$ (x and y are positive numbers. M is P, Si, Ge, B, Al, Ga, or In.), and the like are exemplary examples.

As the $Li_2S$-$GeS_2$-based compounds, include $Li_2S$-$GeS_2$, $Li_2S$-$GeS_2$-$P_2S_5$, and the like are exemplary examples.

The sulfide-based solid electrolyte may be a crystalline material or an amorphous material.

(Hydride-based solid electrolyte)

As the hydride-based solid electrolyte material, $LiBH_4$, $LiBH_4$-3KI, $LiBH_4$-$PI_2$, $LiBH_4$-$P_2S_5$, $LiBH_4$-$LiNH_2$, $3LiBH_4$-LiI, $LiNH_2$, $Li_2AlH_6$, $Li(NH_2)_2I$, $Li_2NH$, $LiGd(BH_4)_3Cl$, $Li_2(BH_4)(NH_2)$, $Li_3(NH_2)I$, $Li_4(BH_4)(NH_2)_3$, and the like can be exemplary examples.

(Polymer-based solid electrolyte)

As the polymer-based solid electrolyte, for example, organic polymer electrolytes such as polymer compounds containing one or more selected from the group consisting of a polyethylene oxide-based polymer compound, a polyorganosiloxane chain, and a polyoxyalkylene chain can be exemplary examples. In addition, it is also possible to use a so-called gel-type solid electrolyte in which a non-aqueous electrolytic solution is held in the polymer compound.

Two or more solid electrolytes can be jointly used as long as the effect of the invention is not impaired.

(Conductive material)

As the conductive material in the positive electrode active material layer 111 of the present embodiment, at least one of a carbon material and a metal compound can be used. As the carbon material, graphite powder, carbon black (for example, acetylene black), a fibrous carbon material, and the like can be exemplary examples. Since carbon black is fine particles and has a large surface area, the addition of carbon black in an appropriate amount, which will be described below, to the positive electrode active material layer 111 makes it possible to enhance the conductivity inside the positive electrode 110 and to improve the charge and discharge efficiency and output characteristics. On the other hand, when the amount of carbon black added is too large, both the binding force between the positive electrode active material layer 111 and the positive electrode current collector 112 and the binding force inside the positive electrode active material layer 111 decrease, which conversely causes an increase in internal resistance. In addition, as the metal compound, metals, metal alloys, and metal oxides, all of which are electrically conductive, are exemplary examples.

In the case of the carbon material, the ratio of the conductive material to the positive electrode active material layer 111 is preferably 5 parts by mass or more and 20 parts by mass or less with respect to 100 parts by mass of the positive electrode active material. In the case of using a fibrous carbon material such as a graphitized carbon fiber or a carbon nanotube as the conductive material, it is also possible to decrease the ratio thereof.

(Binder)

In a case where the positive electrode active material layer 111 has a binder, a thermoplastic resin can be used as the binder. As this thermoplastic resin, polyimide-based resins; fluororesins such as polyvinylidene fluoride (hereinafter, referred to as PVdF in some cases), polytetrafluoroethylene (hereinafter, referred to as PTFE in some cases), tetrafluoroethylene-hexafluoropropylene-vinylidene fluoride-based copolymers, hexafluoropropylene-vinylidene fluoride-based copolymers, and tetrafluoroethylene-perfluorovinyl ether-based copolymers; and polyolefin resins such as polyethylene and polypropylene can be exemplary examples.

Two or more of these thermoplastic resins may be used in a mixture form. When a fluororesin and a polyolefin resin are used as the binder, the ratio of the fluororesin to the entire positive electrode active material layer 111 is set to 1 mass% or more and 10 mass% or less, and the ratio of the polyolefin resin is set to 0.1 mass% or more and 2 mass% or less, the positive electrode active material layer 111 has both a high adhesive force between the positive electrode active material layer 111 and the positive electrode current collector 112 and a high bonding force inside the positive electrode active material layer 111.

(Positive electrode current collector)

As the positive electrode current collector 112 in the positive electrode 110 of the present embodiment, a strip-shaped member formed of a metal material such as Al, Ni, or stainless steel as a forming material can be used. Among these, from the viewpoint of easy processing and low costs, a member that contains Al as the forming material and is processed into a thin film shape is preferable.

As a method for supporting the positive electrode active material layer 111 by the positive electrode current collector 112, a method in which the positive electrode active material layer 111 is formed by pressurization on the positive electrode current collector 112 is an exemplary example. A cold press or a hot press can be used to form the positive electrode active material layer 111 by pressurization.

In addition, the positive electrode active material layer 111 may be supported by the positive electrode current collector 112 by preparing a paste of a mixture of the positive electrode active material, the solid electrolyte, the conductive material, and the binder using an organic solvent to produce a positive electrode mixture, applying and drying the positive electrode mixture to be obtained on at least one surface of the positive electrode current collector 112, and fixing the positive electrode mixture by pressing.

In addition, the positive electrode active material layer 111 may be supported by the positive electrode current collector 112 by preparing a paste of a mixture of the positive electrode active material, the solid electrolyte, and the conductive material using an organic solvent to produce a positive electrode mixture, applying and drying the positive electrode mixture to be obtained on at least one surface of the positive electrode current collector 112, and calcining the positive electrode mixture.

As the organic solvent that can be used in the positive electrode mixture, amine-based solvents such as N,N-dimethylaminopropylamine and diethylenetriamine; ether-based solvents such as tetrahydrofuran; ketone-based solvents such as methyl ethyl ketone; ester-based solvents such as methyl acetate; and amide-based solvents such as dimethylacetamide and N-methyl-2-pyrrolidone (hereinafter, referred to as NMP in some cases) are exemplary examples.

As a method for applying the positive electrode mixture to the positive electrode current collector 112, for example, a slit die coating method, a screen coating method, a curtain coating method, a knife coating method, a gravure coating method, and an electrostatic spraying method are exemplary examples.

The positive electrode 110 can be produced by the method exemplified above.

(Negative electrode)

The negative electrode 120 has a negative electrode active material layer 121 and the negative electrode current collector 122. The negative electrode active material layer 121 contains a negative electrode active material. In addition, the negative electrode active material layer 121 may contain a solid electrolyte and a conductive material. As the solid electrolyte, the conductive material, and a binder, those described above can be used.

(Negative electrode active material)

As the negative electrode active material in the negative electrode active material layer 121, materials which are a carbon material, a chalcogen compound (oxide, sulfide, or the like), a nitride, a metal, or an alloy and which can be doped with lithium ions and from which lithium ions can be de-doped at a potential lower than that of the positive electrode 110 are exemplary examples.

As the carbon material that can be used as the negative electrode active material, graphite such as natural graphite and artificial graphite, cokes, carbon black, pyrolytic carbons, a carbon fiber, and a sintered product of an organic polymer compound can be exemplary examples.

As the oxide that can be used as the negative electrode active material, oxides of silicon represented by a formula $SiO_x$ (here, x is a positive real number) such as $SiO_2$ and SiO; oxides of titanium represented by a formula $TiO_x$ (here, x is a positive real number) such as $TiO_2$ and TiO; oxides of vanadium represented by a formula $VO_x$ (here, x is a positive real number) such as $V_2O_5$ and $VO_2$; oxides of iron represented by a formula $FeO_x$ (here, x is a positive real number) such as $Fe_3O_4$, $Fe_2O_3$, and FeO; oxides of tin represented by a formula $SnO_x$ (here, x is a positive real number) such as $SnO_2$ and SnO; oxides of tungsten represented by a general formula $WO_x$ (here, x is a positive real number) such as $WO_3$ and $WO_2$; and metal composite oxides containing lithium and titanium or vanadium such as $Li_4Ti_5O_{12}$ and $LiVO_2$ can be exemplary examples.

As the sulfide that can be used as the negative electrode active material, sulfides of titanium represented by a formula $TiS_x$ (here, x is a positive real number) such as $Ti_2S_3$, $TiS_2$, and TiS; sulfides of vanadium represented by a formula $VS_x$ (here, x is a positive real number) such $V_3S_4$, $VS_2$, and VS; sulfides of iron represented by a formula $FeS_x$ (here, x is a positive real number) such as $Fe_3S_4$, $FeS_2$, and FeS; sulfides of molybdenum represented by a formula $MoS_x$ (here, x is a positive real number) such as $MO_2S_3$ and $MoS_2$; sulfides of tin represented by a formula $SnS_x$ (here, x is a positive real number) such as $SnS_2$ and SnS; sulfides of tungsten represented by a formula $WS_x$ (here, x is a positive real number) such as $WS_2$; sulfides of antimony represented by a formula $SbS_x$ (here, x is a positive real number) such as $Sb_2S_3$; and sulfides of selenium represented by a formula $SeS_x$ (here, x is a positive real number) such as $Se_5S_3$, $SeS_2$, and SeS can be exemplary examples.

As the nitride that can be used as the negative electrode active material, lithium-containing nitrides such as $Li_3N$ and $Li_{3-x}A_xN$ (here, A is any one or both of Ni and Co, and $0 < x < 3$) can be exemplary examples.

These carbon materials, oxides, sulfides, and nitrides may be used singly or two or more thereof may be jointly used. In addition, these carbon materials, oxides, sulfides, and nitrides may be crystalline or amorphous.

In addition, as the metal that can be used as the negative electrode active material, lithium metal, silicon metal, tin metal, and the like can be exemplary examples.

As the alloy that can be used as the negative electrode active material, lithium alloys such as Li-Al, Li-Ni, Li-Si, Li-Sn, and Li-Sn-Ni; silicon alloys such as Si-Zn; tin alloys such as Sn-Mn, Sn-Co, Sn-Ni, Sn-Cu, and Sn-La; and alloys such as $Cu_2Sb$ and $La_3Ni_2Sn_7$ can also be exemplary examples.

These metals and alloys are used mainly singly as an electrode after being processed into, for example, a foil shape.

Among the above-described negative electrode active materials, the carbon material containing graphite such as natural graphite or artificial graphite as a main component is preferably used for the reason that the potential of the negative electrode 120 rarely changes (that is, the potential flatness is favorable) from a uncharged state to a fully-charged state during charging, the average discharging potential is low, the capacity retention rate at the time of repeatedly charging and discharging the lithium secondary battery is high (that is, the cycle characteristics are favorable), and the like. The shape of the carbon material may be, for example, any of a flaky shape such as natural graphite, a spherical shape such as mesocarbon microbeads, a fibrous shape such as a graphitized carbon fiber, or an aggregate of fine powder.

In addition, among the above-described negative electrode active materials, the oxides are preferably used since the thermal stability is high and dendrites (also referred to as dendritic crystals) are not easily generated by Li metal. As the shape of the oxide, a fibrous or fine powder aggregate is preferably used.

(Negative electrode current collector)

As the negative electrode current collector 122 in the negative electrode 120, a strip-shaped member formed of a metal material such as Cu, Ni, or stainless steel as the forming material can be an exemplary example. Particularly, a member that is formed of Cu as a forming material and processed into a thin film shape is preferable since the negative electrode current collector does not easily produce an alloy with lithium and is easy to process.

As a method for supporting the negative electrode active material layer 121 by the negative electrode current collector 122, similar to the case of the positive electrode 110, a method in which the negative electrode active material layer 121 is formed by pressurization, a method in which a paste-form negative electrode mixture containing a negative electrode active material is applied and dried on the negative electrode current collector 122 and then the negative electrode active material layer 121 is compressed by pressing, and a method in which a paste-form negative electrode mixture containing a negative electrode active material is applied, dried and then sintered on the negative electrode current collector 122 are exemplary examples.

(Solid electrolyte layer)

The solid electrolyte layer 130 has the above-described solid electrolyte.

The solid electrolyte layer 130 can be formed by depositing a solid electrolyte of an inorganic substance on the surface of the positive electrode active material layer 111 in the above-described positive electrode 110 by a sputtering method.

In addition, the solid electrolyte layer 130 can be formed by applying and drying a paste-form mixture containing a solid electrolyte on the surface of the positive electrode active material layer 111 in the above-described positive electrode 110. The solid electrolyte layer 130 may be formed by pressing the dried paste-form mixture and further pressurizing the paste-form mixture by a cold isostatic pressure method (CIP).

The laminate 100 can be produced by laminating the negative electrode 120 on the solid electrolyte layer 130 provided on the positive electrode 110 as described above using a well-known method such that the negative electrode electrolyte layer 121 comes into contact with the surface of the solid electrolyte layer 130.

Another aspect of the present invention includes the following inventions.

[27] A lithium metal composite oxide powder having a layered crystal structure, containing at least Li, Ni, an element X, and an element M, in which the element X is one or more elements selected from the group consisting of Co, Mn, Fe, Cu, Ti, Mg, Al, W, Mo, Nb, Zn, Sn, Zr, Ga, and V, the element M is one or more elements selected from the group consisting of B, Si, S, and P, and a spectrum that is obtained when the lithium metal composite oxide powder is measured by X-ray photoelectron spectroscopy satisfies the following requirement (1) and requirement (2).

Requirement (1)

A peak top is present in a binding energy range of 52 eV to 58 eV, and, when the spectrum in the above-described range is separated into waveforms of a peak A having a peak top at 53.5 $\pm$ 1.0 eV and a peak B having a peak top at 55.5 $\pm$ 1.0 eV, a value of a ratio (P(A)/P(B)) between integrated intensities of the peak A and the peak B is 0.4 or more and 2.0 or less.

Requirement (2)

X(M)/X(Li) that is a ratio between X(Li) that is a lithium atom concentration obtained based on peak areas of a Li1s spectrum, a Ni2p spectrum, a spectrum of the element X, and a spectrum of the element M and X(M) that is an atomic concentration of the element M obtained based on peak areas of the Li1s spectrum, the Ni2p spectrum, the spectrum of the element X, and the spectrum of the element M is 0.4 or more and 1.2 or less.

[28] The lithium metal composite oxide powder according to [27] that is represented by the following composition formula (I).

$$Li[Li_{n1}(Ni_{(1-n-w)}X_nM_w)_{1-n1}]O_2 ... (I)$$

(The element M is one or more elements selected from the group consisting of B, Si, S, and P. The element X is one or more elements selected from the group consisting of Co, Mn, Fe, Cu, Ti, Mg, Al, W, Mo, Nb, Zn, Sn, Zr, Ga, and V. Here, $-0.1 \leq n1 \leq 0.06$, $0.2 \leq n \leq 0.5$, $0.001 \leq w \leq 0.025$, and $n + w < 1$.)

[29] The lithium metal composite oxide powder according to [27] or [28], in which, when a nickel atom concentration that is calculated from peak areas of the Li1s spectrum, the Ni2p spectrum, the spectrum of the element X, and the spectrum of the element M is indicated by X(Ni), and an atomic concentration of the element X is indicated by X(X), a ratio (X(Li)/{ X(Ni) + X(X)}) of the lithium atom concentration to a total atomic concentration of nickel and the element X is 1.5 or more and 4.0 or less.

[30] The lithium metal composite oxide powder according to any one of [27] to [29], in which X(M)/{X (Ni) + X (X)} that is a ratio of the atomic concentration of the element M to the total atomic concentration of nickel and the element X is 0.35 or more and 3.0 or less.

[31] The lithium metal composite oxide powder according to any one of [27] to [30], in which an average particle diameter $D_{50}$ that is a 50% cumulative diameter obtained from wet-type particle size distribution measurement is 3 $\mu$m or more and 10 $\mu$m or less.

[32] The lithium metal composite oxide powder according to any one of [27] to [31], in which, when a positive electrode for a lithium secondary battery in which a mass ratio of the lithium metal composite oxide powder, acetylene black, and PVdF is 92:5:3 (lithium metal composite oxide powder:acetylene black:PVdF) and an electrode area is 1.65 $cm^2$ is formed, a coin-type battery R2032 including the positive electrode for a secondary battery, a separator of a polyethylene porous film, an electrolytic solution obtained by dissolving $LiPF_6$ in a liquid mixture of ethylene carbonate, dimethyl carbonate, and ethyl methyl carbonate in a volume ratio of 30:35:35 to become 1.0 mol/l, and a negative electrode for a secondary battery made of lithium metal is produced, and, when a discharge rate test is carried out on the coin-type battery R2032 as described below under charge and discharge test conditions described below, an initial charge and discharge efficiency to be obtained is 85% to 98%, and a cycle capacity retention rate is 90% to 98%.

• Initial charge and discharge test

At a testing temperature of 25°C, the set current value is set to 0.2 CA for both charging and the discharging, and each of constant-current constant-voltage charging and constant-current-discharging is carried out. The test voltage is changed according to the value of the mole ratio Ni/(Ni + X) of the amount of nickel to the total amount of nickel and the element X in the lithium metal composite oxide, in the case of Ni/(Ni + X) < 0.75, the maximum charging voltage is set to 4.3 V and the minimum discharging voltage is set to 2.5 V, and, in the case of Ni/(Ni + X) $\geq$ 0.75, the maximum charging voltage is set to 4.35 V and the minimum discharging voltage is set to 2.8 V.

• Cycle test

A cycle test is carried out subsequent to initial charging and discharging, and the testing temperature is set to 25°C. The number of times of repetition of a charge and discharge cycle is set to 50 times. The set current value is set to 0.5 CA, and each of constant-current constant-voltage charging and constant-current-discharging is carried out. The following set current value and test voltage were changed according to the value of the mole ratio Ni/(Ni + X) of the amount of nickel to the total amount of nickel and the element X in the lithium metal composite oxide.

In the case of Ni/(Ni + X) < 0.75

Charging: Set current value of 1 CA, maximum voltage of 4.3 V, constant-voltage constant-current charging

Discharging: Set battery value of 1 CA, minimum voltage of 2.5 V, constant-current-discharging

In the case of Ni/(Ni + X) ≥ 0.75

Charging: Set current value of 0.5 CA, maximum voltage of 4.35 V, constant-voltage constant-current charging
Discharging: Set battery value of 1 CA, minimum voltage of 2.8 V, constant-current-discharging

[33] A positive electrode active material for a lithium secondary battery, containing the lithium metal composite oxide powder according to any one of [27] to [32].

[34] A method for producing a lithium metal composite oxide powder, including mixing a precursor of a positive electrode active material for a lithium secondary battery and a lithium compound to obtain a first mixture, calcining the first mixture to obtain a raw material compound, mixing the raw material compound and a compound containing an element M to obtain a second mixture, and carrying out a thermal treatment in which the second mixture is heated in an oxidizing atmosphere, in which a BET specific surface area of the compound containing the element M is 0.14 m$^2$/g or more and 1.6 m$^2$/g or less.

[35] The method of [34], in which the lithium metal composite oxide that is obtained after the thermal treatment is represented by the following composition formula (I).

$$\mathrm{Li[Li_{n1}(Ni_{(1-n-w)}X_nM_w)_{1-n1}]O_2} \qquad \ldots(I)$$

(M is one or more elements selected from the group consisting of B, Si, S, and P. X is one or more elements selected from the group consisting of Co, Mn, Fe, Cu, Ti, Mg, Al, W, Mo, Nb, Zn, Sn, Zr, Ga, and V. Here, $-0.1 \leq n1 \leq 0.06$, $0.2 \leq n \leq 0.5$, $0.001 \leq w \leq 0.025$, and $n + w < 1$.)

[36] The method of [34] or [35], in which, in the obtaining of the second mixture, the raw material compound and the compound containing the element M are mixed such that S1/S2 that is a ratio of a BET specific surface area S1 of the raw material compound to a BET specific surface area S2 of the compound containing the element M becomes 0.15 or more and 7 or less.

[37] The method of any one of [34] to [36], in which, in the obtaining of the second mixture, a molar amount of the compound of the element M is 0.4 mol% or more and 4.0 mol% or less with respect to a total amount (100 mol%) of the raw material compound charged.

[38] The method for producing a lithium metal composite oxide powder according to any one of [34] to [37], in which, in the thermal treatment, heating is carried out at a temperature of 300°C or higher and 550°C or lower.

Furthermore, as the aspect of the present invention, the following aspects are exemplary examples.

[39] A positive electrode for a lithium secondary battery, containing the positive electrode active material for a lithium secondary battery according to [32]

[40] A lithium secondary battery having the positive electrode for a lithium secondary battery according to [39].

[Examples]

Next, the present invention will be described in more detail using examples.

<Composition analysis>

The composition analysis of a lithium metal composite oxide powder or a nickel-containing transition metal composite hydroxide that was produced by a method, which will be described below, was carried out using an inductively coupled plasma emission spectrometer (SPS3000, manufactured by Seiko Instruments Inc.) after the obtained lithium metal composite oxide powder was dissolved in hydrochloric acid.

<Measurement of BET specific surface area>

The BET specific surface area was measured using a BET specific surface area meter (Macsorb (registered trademark) manufactured by Mountech Co., Ltd.) (unit: m$^2$/g). In the case of measuring the BET specific surface area of a raw material compound, the raw material compound was dried at 105°C for 30 minutes in a nitrogen atmosphere as a pretreatment. Additionally, in the case of measuring the BET specific surface area of the powder of a compound containing an element M, the pretreatment was not carried out, and the powder in a dry state was used in the measurement.

<Measurement of average particle diameter $D_{50}$ by wet method>

In the present embodiment, the average particle diameters $D_{50}$ of the nickel-containing transition metal composite hydroxide, which was a precursor, a raw material compound, and the lithium metal composite oxide powder were measured by a wet method. Specifically, 0.1 g of the powder of the nickel-containing transition metal composite hydroxide, which was the precursor, the raw material compound, or the lithium metal composite oxide powder was poured into 50 ml of a 0.2 mass% sodium hexametaphosphate aqueous solution to obtain a dispersion liquid in which this powder was dispersed. The particle size distribution of the obtained dispersion liquid was measured using a laser diffraction particle size distribution meter (MS 2000 manufactured by Malvern Panalytical Ltd.) to obtain a volume-based cumulative particle size distribution curve. In the cumulative particle size distribution curve, the value of the particle diameter at the time of 50% accumulation was defined as the average particle diameter $D_{50}$.

<Measurement of average particle diameter $D_{50}$ by dry method>

In the present embodiment, since the compound containing the element M was a water-soluble compound, the average particle diameter $D_{50}$ was measured by a dry method. Specifically, the dry-type particle size distribution was measured with a laser diffraction particle size distribution meter (MS 2000 manufactured by Malvern Panalytical Ltd.) using 2 g of the powder, and a volume-based cumulative particle size distribution curve was obtained. In the cumulative particle size distribution curve, the value of the particle diameter at the time of 50% accumulation was defined as the average particle diameter $D_{50}$.

<X-ray photoelectron spectroscopy (XPS)>

The spectra of lithium 1s and nickel 2p, the spectrum of the element M (boron 1s in examples to be described below), and the spectrum of the element X (cobalt 2p, manganese 2p, and zirconium 3d in the examples to be described below) were measured using an X-ray photoelectron spectroscopic analyzer (K-Alpha manufactured by Thermo Fisher Scientific Inc.). AlK$\alpha$ rays were used as the X-ray source, and a flood gun (accelerating voltage: 0.3 V, current: 100 $\mu$A) was used for charge neutralization at the time of measurement. As the measurement conditions, the spot size was set to 400 $\mu$m, the pass energy was set to 50 eV, the step was set to 0.1 eV, and the dwell time was set to 500 ms. Regarding the obtained XPS spectra, peak areas and atomic concentrations to be described below were calculated using an Avantage data system manufactured by Thermo Fisher Scientific Inc. Electrification correction was carried out on a peak belonging to surface-contaminated hydrocarbons in a carbon 1s spectrum to 284.6 eV.

• Measurement of peak P(A)/P(B)

Waveform separation was carried out on the spectrum at binding energy of 52 eV to 58 eV, that is, the spectrum of lithium 1s with the half width of a peak A having a peak top at 53.5 $\pm$ 1.0 eV set to 1.0 $\pm$ 0.2 eV and the half width of a peak B having a peak top at 55.5 $\pm$ 1.0 eV set to 1.5 $\pm$ 0.3 eV. Regarding the obtained peak A and peak B, the peak areas P(A) and P(B) were calculated, and the ratio P(A)/P(B) was further calculated.

• Measurement of X(Li)/{X(Ni) + X(X)}, X(M)/{X(Ni) + X(X)}, and X(M)/X(Li)

Regarding the spectra of lithium 1s and nickel 2p, the spectrum of the element M (boron 1s in the examples to be described below), and the spectrum of the element X (cobalt 2p, manganese 2p, zirconium 3d, or the like in the examples to be described below), the atomic concentration (atm%) of each element in all of the elements was calculated from the peak area of the spectrum of each element and the sensitivity coefficient of each element, and furthermore, X(Li)/{X(Ni) + X(X)} and X(M)/{X(Ni) + X(X)} were calculated as the ratio of the elements. Similarly, X(M)/X(Li) was calculated.

<Production of positive electrode for lithium secondary battery>

A paste-form positive electrode mixture was prepared by adding the lithium metal composite oxide powder obtained by the production method described below, a conductive material (acetylene black), and a binder (PVdF) to achieve a composition of the lithium metal composite oxide powder:conductive material:binder = 92:5:3 (mass ratio) and carrying out kneading thereon. During the preparation of the positive electrode mixture, N-methyl-2-pyrrolidone was used as an organic solvent.

The obtained positive electrode mixture was applied to a 40 $\mu$m-thick Al foil, which was to serve as a current collector, and dried in a vacuum at 150°C for eight hours, thereby obtaining a positive electrode for a lithium secondary battery. The electrode area of the positive electrode for a lithium secondary battery was set to 1.65 cm$^2$.

<Production of lithium secondary battery (coin-type half cell)>

The following operation was carried out in a glove box under an argon atmosphere.

The positive electrode for a lithium secondary battery produced in the section <Production of positive electrode for lithium secondary battery> was placed on the lower lid of a part for a coin type battery R2032 (manufactured by Hohsen Corp.) with the aluminum foil surface facing downward, and a separator (polyethylene porous film) was placed on the positive electrode. An electrolytic solution (300 μl) was poured thereinto. The electrolytic solution used was prepared by dissolving $LiPF_6$ in a liquid mixture of ethylene carbonate, dimethyl carbonate, and ethyl methyl carbonate in a volume ratio of 30:35:35 to 1.0 mol/l.

Next, lithium metal was used as a negative electrode, and the negative electrode was placed on the upper side of the laminate film separator. An upper lid was placed through a gasket and caulked using a caulking machine, thereby producing a lithium secondary battery (coin-type half cell R2032; hereinafter, referred to as "half cell" in some cases).

<Charge and discharge test>

An initial charge and discharge efficiency test and a cycle test were carried out using the half cell produced by the above-described method, and the initial charge and discharge efficiency and the cycle capacity retention rate were evaluated as the indexes of the performance of the secondary battery.

• Initial charge and discharge test

At a testing temperature of 25°C, the set current value was set to 0.2 CA for both charging and the discharging, and each of constant-current constant-voltage charging and constant-current-discharging was carried out. The test voltage was changed according to the value of the mole ratio Ni/(Ni + X) of the amount of nickel to the total amount of nickel and the element X in the lithium metal composite oxide, in the case of Ni/(Ni + X) < 0.75, the maximum charging voltage was set to 4.3 V and the minimum discharging voltage was set to 2.5 V. In the case of Ni/(Ni + X) ≥ 0.75, the maximum charging voltage was set to 4.35 V and the minimum discharging voltage was set to 2.8 V.

• Initial charge and discharge efficiency

The initial charge and discharge efficiency was calculated from the initial charge capacity and the initial discharge capacity in the initial charge and discharge test by the following equation. It means that, as the initial charge and discharge efficiency increases, it is possible to more efficiently use lithium ions in the lithium metal composite oxide, which is desirable as the battery performance.

Initial charge and discharge efficiency (%) =

Initial discharge capacity (mAh/g)/initial charge capacity (mAh/g) x 100

• Cycle test

A cycle test was carried out subsequent to initial charging and discharging, and the testing temperature was set to 25°C. The number of times of repetition of a charge and discharge cycle was set to 50 times. The set current value was set to 0.5 CA, and each of constant-current constant-voltage charging and constant-current-discharging was carried out. The set current value and test voltage were changed as follows according to the value of the mole ratio Ni/(Ni + X) of the amount of nickel to the total amount of nickel and the element X in the lithium metal composite oxide.

In the case of Ni/(Ni + X) < 0.75

Charging: Set current value of 1 CA, maximum voltage of 4.3 V, constant-voltage constant-current charging
Discharging: Set battery value of 1 CA, minimum voltage of 2.5 V, constant-current-discharging

In the case of Ni/(Ni + X) ≥ 0.75

Charging: Set current value of 0.5 CA, maximum voltage of 4.35 V, constant-voltage constant-current charging
Discharging: Set battery value of 1 CA, minimum voltage of 2.8 V, constant-current-discharging

• Cycle capacity retention rate

From the discharge capacity of the first cycle and the discharge capacity of the 50th cycle in the cycle test, the cycle capacity retention rate was calculated by the following equation. As the cycle capacity retention rate increases, it is possible to further suppress a decrease in the battery capacity after the repetition of charging and discharging, which is preferable as the battery performance.

$$\text{Cycle capacity retention rate } (\%) =$$

$$\text{Discharge capacity of first cycle (mAh/g)/discharge capacity of 50}^{th} \text{ cycle}$$

$$(\text{mAh/g) x } 100$$

<Determination of presence or absence of generation of fixed substance in thermal treatment container after thermal treatment>

After the thermal treatment step, the lithium metal composite oxide powder adhering to the inside of the thermal treatment container was removed with a brush, and a solid matter remaining on the inner wall of the thermal treatment container after the removal was determined as a fixed substance. Furthermore, the fixed substance was visually confirmed, and, in a case where a white fixed substance was present, fixation was determined to have occurred. In a case where the fixed substance is generated, since it becomes necessary to periodically stop the facility or clean the facility in order to remove the fixed substance, the fixed substance is desirably not generated from the viewpoint of the productivity of the lithium metal composite oxide powder.

«Example 1»

• Production of lithium metal composite oxide powder 1

After water was poured into a reaction vessel equipped with a stirrer and an overflow pipe, a sodium hydroxide aqueous solution was added thereto. The liquid temperature in the reaction vessel was held at 50°C.
A nickel sulfate aqueous solution, a cobalt sulfate aqueous solution, a manganese sulfate aqueous solution, and a zirconium sulfate aqueous solution were mixed such that the mole ratio (Ni:Co:Mn) became 0.55: 0.20: 0.25 and Zr/(Ni + Co + Mn) became 0.005, thereby preparing a mixed raw material liquid 1.
Next, the mixed raw material liquid 1 and an ammonium sulfate aqueous solution, as a complexing agent, were continuously added into the reaction vessel under stirring. A sodium hydroxide aqueous solution was timely added dropwise such that the pH of the solution in the reaction vessel became 11.9. A nickel-containing transition metal composite hydroxide was obtained, washed, then, dehydrated with a centrifuge, washed, dehydrated, isolated, and dried at 105°C, thereby obtaining a nickel-containing transition metal composite hydroxide 1. The average particle diameter $D_{50}$ of the nickel-containing transition metal composite hydroxide 1 was 3.8 $\mu$m. In addition, as a result of the composition analysis of the nickel-containing transition metal composite hydroxide 1, the mole ratio (Ni:Co:Mn) was 0.55:0.20:0.25, and Zr/(Ni + Co + Mn was 0.004.
The nickel-containing transition metal composite hydroxide 1 and lithium hydroxide monohydrate were weighed and mixed together such that the mole ratio (Li/(Ni + Co + Mn)) became 1.03, thereby obtaining a mixture 1. The mixture 1 was sintered at 650°C for five hours in an oxygen atmosphere, then, pulverized with a millstone-type pulverizer, and further sintered at 970°C for five hours in the oxygen atmosphere, thereby obtaining a sintered product 1. The sintered product 1 was crushed with a pin mill operated at a rotation speed of 16000 rpm, thereby obtaining a raw material compound 1. The raw material compound 1 had a BET specific surface area (S1) of 0.68 $m^2$/g and an average particle diameter $D_{50}$ of 4.0 $\mu$m.
Boric acid A having a BET specific surface area (S2) of 0.80 $m^2$/g and the raw material compound 1 were mixed such that the mole ratio (B/(Ni + X)) became 0.005, thereby obtaining a mixture 2. The mixture 2 was loaded into a mullite-corgerite saggar and poured into a thermal treatment furnace in a static state. An atmosphere to which dehumidified air was continuously supplied was formed in the thermal treatment furnace, and a thermal treatment was carried out at 400°C for five hours. After the thermal treatment, the powder after the thermal treatment was crushed with a pin mill operated at a rotation speed of 16000 rpm, thereby obtaining a lithium metal composite oxide powder 1. As a result of removing the powder remaining in the saggar after the end of the thermal treatment and visually inspecting the inner wall, no fixed substance was generated.

As a result of the composition analysis of the lithium metal composite oxide powder 1, B/(Ni + X) was 0.0042, and, in the composition formula (I) and the composition formula (I)-1, n1 was 0.013, n was 0.447, w was 0.004, y was 0.198, and z was 0.245. The average particle diameter $D_{50}$ of the lithium metal composite oxide powder 1 was 4.0 $\mu$m.

S1/S2, the XPS measurement results, and the battery performance results in the method for producing the lithium metal composite oxide powder 1 are shown in Table 1 and Table 2 below.

<<Example 2>>

• Production of lithium metal composite oxide powder 2

Boric acid B having a BET specific surface area (S2) of 0.15 m$^2$/g and the raw material compound 1 obtained in the process of Example 1 were mixed such that the mole ratio (B/(Ni + X)) became 0.005, thereby obtaining a mixture 3. After that, the mixture 3 was loaded into a mullite-corgerite saggar and poured into a thermal treatment furnace in a static state. An atmosphere to which dehumidified air was continuously supplied was formed in the thermal treatment furnace, and a thermal treatment was carried out at 400°C for five hours. After the thermal treatment, the powder after the thermal treatment was crushed with a pin mill operated at a rotation speed of 16000 rpm, thereby obtaining a lithium metal composite oxide powder 2. As a result of removing the powder remaining in the saggar after the end of the thermal treatment and visually inspecting the inner wall, no fixed substance was generated.

As a result of the composition analysis of the lithium metal composite oxide powder 2, B/(Ni + X) was 0.0042, and, in the composition formula (I) and the composition formula (I)-1, n1 was 0.015, n was 0.448, w was 0.004, y was 0.199, and z was 0.245. The average particle diameter $D_{50}$ of the lithium metal composite oxide powder 2 was 4.2 $\mu$m.

S1/S2, the XPS measurement results, and the battery performance results in the method for producing the lithium metal composite oxide powder 2 are shown in Table 1 and Table 2 below.

<<Example 3>>

• Production of lithium metal composite oxide powder 3

The boric acid A and the raw material compound 1 obtained in the process of Example 1 were mixed such that the mole ratio (B/(Ni + X)) became 0.020, thereby obtaining a mixture 4. After that, while dehumidified air was continuously supplied into a furnace tube, the mixture 4 was continuously poured into a rotary kiln in a state where the furnace tube was heated to 500°C, and a thermal treatment was carried out for two hours as the heating portion residence time. After the thermal treatment, the mixture 4 was crushed with a pin mill operated at a rotation speed of 16000 rpm, thereby obtaining a lithium metal composite oxide powder 3. In addition, a thermal treatment with the rotary kiln under the above-described conditions was continuously carried out for 15 hours. After the end of the thermal treatment, the powder remaining in the furnace tube of the rotary kiln was removed, the inner wall of the furnace tube was visually inspected, and it was found that no fixed substance was generated.

As a result of the composition analysis of the lithium metal composite oxide powder 3, B/(Ni + X) was 0.015, and, in the composition formula (1) and the composition formula (I)-1, n1 was 0.004, n was 0.443, w was 0.015, y was 0.197, and z was 0.242. In addition, the average particle diameter $D_{50}$ of the lithium metal composite oxide powder 3 was 4.2 $\mu$m.

S1/S2, the XPS measurement results, and the battery performance results in the method for producing the lithium metal composite oxide powder 3 are shown in Table 1 and Table 2 below.

<<Example 4>>

• Production of lithium metal composite oxide powder 4

Boric acid C having a BET specific surface area (S2) of 0.12 m$^2$/g and the raw material compound 1 obtained in the process of Example 1 were mixed such that the mole ratio (B/(Ni + X)) became 0.030, thereby obtaining a mixture 5. After that, while dehumidified air was continuously supplied into a furnace tube, the mixture 5 was continuously poured into a rotary kiln in a state where the furnace tube was heated to 500°C, and a thermal treatment was carried out for two hours as the heating portion residence time, thereby obtaining a lithium metal composite oxide powder 4.

Furthermore, a thermal treatment with the rotary kiln under the above-described conditions was continuously carried out for 15 hours. After the end of the thermal treatment, the powder remaining in the furnace tube of the rotary kiln was removed, and the inner wall of the furnace tube was visually inspected, thereby confirming a white fixed substance. Furthermore, as a result of analyzing the composition of a powder obtained by peeling off the fixed substance, the main element of the fixed substance was boron.

As a result of the composition analysis of the lithium metal composite oxide powder 4, B/(Ni + X) was 0.020, and, in the composition formula (1) and the composition formula (I)-1, n1 was -0.003, n was 0.441, w was 0.019, y was 0.195, and z was 0.242. In addition, the average particle diameter $D_{50}$ of the lithium metal composite oxide powder 4 was 4.0 $\mu$m.

S1/S2, the XPS measurement results, and the battery performance results in the method for producing the lithium metal composite oxide powder 4 are shown in Table 1 and Table 2 below.

<<Comparative Example 1>>

• Production of lithium metal composite oxide powder 5

The boric acid B and the raw material compound 1 obtained in the process of Example 1 were mixed such that the mole ratio (B/(Ni + X)) of boron to nickel, cobalt, and manganese became 0.020, thereby obtaining a mixture 6. This mixture 6 was regarded as a lithium metal composite oxide powder 5.

As a result of the composition analysis of the lithium metal composite oxide powder 5, B/(Ni + X) was 0.020, and, in the composition formula (I) and the composition formula (I)-1, n1 was 0.003, n was 0.443, w was 0.019, y was 0.195, and z was 0.244.

In addition, the average particle diameter $D_{50}$ of the lithium metal composite oxide powder 5 was 3.7 $\mu$m.

S1/S2, the XPS measurement results, and the battery performance results in the method for producing the lithium metal composite oxide powder 5 are shown in Table 1 and Table 2 below.

<<Comparative Example 2>>

• Production of lithium metal composite oxide powder 6

The raw material compound 1 obtained in the process of Example 1 was regarded as a lithium metal composite oxide powder 6.

As a result of the composition analysis of the lithium metal composite oxide powder 6, B/(Ni + Co + Mn) was 0, and, in the composition formula (I) and the composition formula (I)-1, n1 was 0.021, n was 0.447, w was 0.000, y was 0.196, and z was 0.247. The average particle diameter $D_{50}$ of the lithium metal composite oxide powder 6 was 4.0 $\mu$m.

The XPS measurement results and the battery performance results of the lithium metal composite oxide powder 6 are shown in Table 1 and Table 2 below.

<<Example 5>>

• Production of lithium metal composite oxide powder 7

After water was poured into a reaction vessel equipped with a stirrer and an overflow pipe, a sodium hydroxide aqueous solution was added thereto. The liquid temperature in the reaction vessel was held at 50°C.

A nickel sulfate aqueous solution, a cobalt sulfate aqueous solution, and a manganese sulfate aqueous solution were mixed together such that the atom ratio of nickel atoms, cobalt atoms, and manganese atoms became 0.91:0.07:0.02, thereby adjusting a mixed raw material liquid 2.

Next, the mixed raw material liquid 2 and an ammonium sulfate aqueous solution, as a complexing agent, were continuously added into the reaction vessel under stirring. A sodium hydroxide aqueous solution was timely added dropwise such that the pH of the solution in the reaction vessel became 12.5 to obtain a nickel-containing transition metal complex hydroxide, and the nickel-containing composite metal hydroxide was washed, then, dehydrated with a centrifuge, washed, dehydrated, isolated, and dried at 105°C, thereby obtaining a nickel-containing transition metal composite hydroxide 2. The average particle diameter $D_{50}$ of the nickel-containing transition metal composite hydroxide 2 was 2.9 $\mu$m. In addition, as a result of the composition analysis of the nickel-containing transition metal composite hydroxide 2, the mole ratio (Ni:Co:Mn) was 0.91:0.07:0.02.

The nickel-containing transition metal composite hydroxide 2, lithium hydroxide monohydrate, and potassium sulfate were weighed and mixed together such that the mole ratio (Li/(Ni + Co + Mn)) became 1.10 and the mole ratio ($K_2SO_4$/(LiOH + $K_2SO_4$)) became 0.1, thereby obtaining a mixture 7. After that, the mixture 7 was sintered at 775°C for 10 hours in an oxygen atmosphere, thereby obtaining a sintered product 3. The sintered product 3 and pure water having a liquid temperature adjusted to 5°C were mixed together such that the ratio of the weight of the sintered product 2 became 0.3 with respect to the total amount, and the obtained slurry was stirred for 20 minutes and then dehydrated. Furthermore, pure water having a liquid temperature adjusted to 5°C was added to the slurry as a shower water as much as twice the weight of the sintered product 3, and then the slurry was dehydrated and dried at 150°C. After dried, the slurry was poured into a pin mill operated at a rotation speed of 16000 rpm and crushed, thereby obtaining a raw material compound 2. The raw material compound 2 had an average particle diameter $D_{50}$ of 3.1 $\mu$m and a BET specific surface area (S1) of 1.6 m$^2$/g.

The raw material compound 2 and the boric acid A were mixed together such that the mole ratio (B/(Ni + Co + Mn)) became 0.02, thereby obtaining a mixture 8. After that, the mixture 7 was loaded into an alumina saggar and poured into a thermal treatment furnace in a static state. An oxygen gas was continuously supplied into the thermal treatment furnace, and a thermal treatment was carried out at 300°C for five hours. The powder obtained after the thermal treatment was regarded as a lithium metal composite oxide powder 6.

As a result of removing the powder remaining in the saggar after the end of the thermal treatment and visually inspecting the inner wall, no fixed substance was generated.

As a result of the composition analysis of the lithium metal composite oxide powder 7, B/(Ni + X) was 0.018, and, in the composition formula (I) and the composition formula (I)-1, n1 was 0.010, n was 0.091, w was 0.017, y was 0.069, and z was 0.022. In addition, the average particle diameter $D_{50}$ of the lithium metal composite oxide powder 7 was 3.0 $\mu$m.

S1/S2, the XPS measurement results, and the battery performance results in the method for producing the lithium metal composite oxide powder 7 are shown in Table 1 and Table 2 below.

<<Comparative Example 3>>

• Production of lithium metal composite oxide powder 8

The raw material compound 2 obtained in the process of Example 5 was regarded as a lithium metal composite oxide powder 8 that was to be used in Comparative Example 3. As a result of the composition analysis of the lithium metal composite oxide powder 8, B/(Ni + X) was 0, and, in the composition formula (1) and the composition formula (I)-1, n1 was 0.013, n was 0.086, w was 0, y was 0.067, and z was 0.020. In addition, the average particle diameter $D_{50}$ of the lithium metal composite oxide powder 8 was 3.0 $\mu$m.

The XPS measurement results and the battery performance results of the lithium metal composite oxide powder 8 are shown in Table 1 and Table 2 below.

<<Comparative Example 4>>

• Production of lithium metal composite oxide powder 9

The raw material compound 2 obtained in the process of Example 5 was loaded into an alumina saggar and poured into a thermal treatment furnace in a static state. An oxygen gas was continuously supplied into the thermal treatment furnace, and a thermal treatment was carried out at 300°C for five hours. The powder obtained after the thermal treatment was regarded as a lithium metal composite oxide powder 9.

As a result of the composition analysis of the lithium metal composite oxide powder 9, B/(Ni + X) was 0, and, in the composition formula (I) and the composition formula (I)-1, n1 was 0.013, n was 0.086, w was 0, y was 0.067, and z was 0.02. In addition, the average particle diameter $D_{50}$ of the lithium metal composite oxide powder 9 was 3.0 $\mu$m.

The XPS measurement results and the battery performance results of the lithium metal composite oxide powder 9 are shown in Table 1 and Table 2 below.

The production conditions for Examples 1 to 5 and Comparative Examples 1 to 4 are summarized in Table 1. Furthermore, the compositions, P(A)/P(B), X(M)/X(Li), X(Li)/{X(Ni) + X(X)}, X(Li)/{X(Ni)+X(X)}, and the results of the initial charge and discharge efficiency, the cycle retention rate, and the like are summarized in Table 2.

[Table 1]

| | Composition of raw material compound used in second mixing step | BET specific surface area of raw material compound S1 (m²/g) | Compound of element M | BET specific surface area of compound of element M S2 (m²/g) | Mole ratio of compound of element M to total amount of raw material compound charged (mol%) | S1/S2 | Thermal treatment method | Thermal treatment container | Thermal treatment atmosphere | Set thermal treatment temperature (°C) | Generation of fixed substance in thermal treatment container after thermal treatment |
|---|---|---|---|---|---|---|---|---|---|---|---|
| Example 1 | Ni/Co/Mn/Zr = 55/20/25/0.4 | 0.68 | $H_3BO_3$ | 0.80 | 0.5 | 0.9 | fixed bed | Saggar | Dehumidified air | 400 | Absent |
| Example 2 | Ni/Co/Mn/Zr = 55/20/25/0.4 | 0.68 | $H_3BO_3$ | 0.15 | 0.5 | 4.5 | fixed bed | Saggar | Dehumidified air | 400 | Absent |
| Example 3 | Ni/Co/Mn/Zr = 55/20/25/0.4 | 0.68 | $H_3BO_3$ | 0.80 | 2.0 | 0.9 | fluidized bed | Rotary kiln furnace tube | Dehumidified air | 500 | Absent |
| Example 4 | Ni/Co/Mn/Zr = 55/20/25/0.4 | 0.68 | $H_3BO_3$ | 0.12 | 3.0 | 5.7 | fluidized bed | Rotary kiln furnace tube | Dehumidified air | 500 | Present |
| Comparative Example 1 | Ni/Co/Mn/Zr = 55/20/25/0.4 | 0.68 | $H_3BO_3$ | 0.15 | 2.0 | 4.5 | - | - | - | - | - |
| Comparative Example 2 | Ni/Co/Mn/Zr = 55/20/25/0.4 | 0.68 | - | - | 0.0 | - | - | - | - | | - |
| Example 5 | Ni/Co/Mn = 91/7/2 | 1.6 | $H_3BO_3$ | 0.80 | 2.0 | 2.0 | fixed bed | Saggar | Oxygen | 300 | Absent |
| Comparative Example 3 | Ni/Co/Mn = 91/7/2 | 1.6 | - | - | 0.0 | - | - | - | - | - | - |
| Comparative Example 4 | Ni/Co/Mn = 91/7/2 | 1.6 | - | - | 0.0 | - | fixed bed | Saggar | Oxygen | 300 | Absent |

[Table 2]

| | Composition | Composition formula (I) | | | Composition formula (I)-1 | | Composition formula | Average particle diameter $D_{50}$ ($\mu$m) | XPS measurement | | | | Battery performance | |
|---|---|---|---|---|---|---|---|---|---|---|---|---|---|---|
| | | n1 | n | w | y | z | Kind of element M | | P (A)/ P (B) | X (M)/ X (Li) | X (Li) / {X (Ni) + X (X)} | X (M)/ {X (Ni) + X (X) } | Initial charge and discharge efficiency (%) | Cycle capacity retention (%) |
| Example 1 | Ni/Co/Mn/Zr = 55/20/25/0.4 | 0.013 | 0.447 | 0.004 | 0.198 | 0.245 | B | 4.0 | 1.8 | 0.4 | 1.6 | 0.6 | 87.3 | 91.0 |
| Example 2 | Ni/Co/Mn/Zr = 55/20/25/0.4 | 0.015 | 0.448 | 0.004 | 0.199 | 0.245 | B | 4.2 | 1.4 | 0.4 | 1.8 | 0.7 | 88.3 | 92.3 |
| Example 3 | Ni/Co/Mn/Zr = 55/20/25/0.4 | 0.004 | 0.443 | 0.015 | 0.197 | 0.242 | B | 4.2 | 1.1 | 0.5 | 2.9 | 1.5 | 86.4 | 95.9 |
| Example 4 | Ni/Co/Mn/Zr = 55/20/25/0.4 | -0.003 | 0.441 | 0.019 | 0.195 | 0.242 | B | 4.0 | 1.1 | 0.8 | 3.3 | 2.5 | 85.9 | 93.2 |
| Comparative Example 1 | Ni/Co/Mn/Zr = 55/20/25/0.4 | 0.003 | 0.443 | 0.019 | 0.195 | 0.244 | B | 3.7 | 0.0 | 2.2 | 22.0 | 48.6 | 84.0 | 91.1 |
| Comparative Example 2 | Ni/Co/Mn/Zr = 55/20/25/0.4 | 0.021 | 0.447 | 0.000 | 0.196 | 0.247 | None | 4.0 | 1.6 | 0.0 | 1.4 | 0.0 | 85.2 | 85.1 |
| Example 5 | Ni/Co/Mn = 91/7/2 | 0.010 | 0.091 | 0.017 | 0.069 | 0.022 | B | 3.0 | 0.5 | 0.8 | 2.8 | 2.2 | 88.5 | 88.2 |
| Comparative Example 3 | Ni/Co/Mn = 91/7/2 | 0.013 | 0.086 | 0.000 | 0.067 | 0.020 | None | 3.0 | 4.0 | 0.0 | 0.8 | 0.0 | 84.8 | 80.0 |
| Comparative Example 4 | Ni/Co/Mn = 91/7/2 | 0.013 | 0.086 | 0.000 | 0.067 | 0.020 | None | 3.0 | 1.5 | 0.0 | 0.9 | 0.0 | 81.6 | 66.9 |

Fig. 2 shows a Li1s spectrum obtained by XPS measurement of the lithium metal composite oxide of Example 3 and a peak A and a peak B obtained by waveform separation.

Fig. 3 shows a Li1s spectrum obtained by XPS measurement of the lithium metal composite oxide of Comparative Example 1.

Fig. 4 shows a Li1s spectrum obtained by XPS measurement of the lithium metal composite oxide of Example 5 and a peak A and a peak B obtained by waveform separation.

Fig. 5 shows a Li1s spectrum obtained by XPS measurement of the lithium metal composite oxide of Comparative Example 3 and a peak A and a peak B obtained by waveform separation.

[Industrial Applicability]

According to the present invention, it is possible to provide a lithium metal composite oxide powder capable of improving the initial charge and discharge efficiency and the cycle retention rate of a lithium secondary battery, a positive electrode active material for a lithium secondary battery in which the same is used, and a method for producing a lithium metal composite oxide powder.

[Reference Signs List]

1: Separator
2: Positive electrode
3: Negative electrode
4: Electrode group
5: Battery can
6: Electrolytic solution
7: Top insulator
8: Sealing body
10: Lithium secondary battery
21: Positive electrode lead
31: Negative electrode lead

**Claims**

1. A lithium metal composite oxide powder having a layered crystal structure, comprising:

   at least Li, Ni, an element X, and an element M,
   wherein the element X is one or more elements selected from the group consisting of Co, Mn, Fe, Cu, Ti, Mg, Al, W, Mo, Nb, Zn, Sn, Zr, Ga, and V, the element M is one or more elements selected from the group consisting of B, Si, S, and P, and a spectrum that is obtained when the lithium metal composite oxide powder is measured by X-ray photoelectron spectroscopy satisfies the following requirement (1) and requirement (2),

      requirement (1)
      a peak top is present in a binding energy range of 52 eV to 58 eV, and, when the spectrum in the above-described range is separated into waveforms of a peak A having a peak top at $53.5 \pm 1.0$ eV and a peak B having a peak top at $55.5 \pm 1.0$ eV, a value of P(A)/P(B) that is a ratio between integrated intensities of the peak A and the peak B is 0.3 or more and 3.0 or less, and
      requirement (2)
      X(M)/X(Li) that is a ratio between X(Li) that is a lithium atom concentration obtained based on peak areas of a Li1s spectrum, a Ni2p spectrum, a spectrum of the element X, and a spectrum of the element M and X(M) that is an atomic concentration of the element M obtained based on peak areas of the Li1s spectrum, the Ni2p spectrum, the spectrum of the element X, and the spectrum of the element M is 0.2 or more and 2.0 or less.

2. The lithium metal composite oxide powder according to Claim 1 that is represented by the following composition formula (I),

$$Li[Li_{n1}(Ni_{(1-n-w)}X_nM_w)_{1-n1}]O_2 \qquad ... (I)$$

(the element M is one or more elements selected from the group consisting of B, Si, S, and P, and the element X is one or more elements selected from the group consisting of Co, Mn, Fe, Cu, Ti, Mg, Al, W, Mo, Nb, Zn, Sn, Zr, Ga, and V; here, $-0.1 \leq n1 \leq 0.2$, $0 < n \leq 0.8$, $0 < w \leq 0.05$, and $n + w < 1$ are satisfied).

3. The lithium metal composite oxide powder according to Claim 1 or 2,

   wherein, when a nickel atom concentration that is calculated from peak areas of the Li1s spectrum, the Ni2p spectrum, the spectrum of the element X, and the spectrum of the element M is indicated by X(Ni), and an atomic concentration of the element X is indicated by X(X),
   X(Li)/{ X(Ni) + X(X)} that is a ratio of the lithium atom concentration to a total atomic concentration of nickel and the element X is 1.0 or more and 5.0 or less.

4. The lithium metal composite oxide powder according to any one of Claims 1 to 3,

   wherein, when a nickel atom concentration that is calculated from peak areas of the Li1s spectrum, the Ni2p spectrum, the spectrum of the element X, and the spectrum of the element M is indicated by X(Ni), and an atomic concentration of the element X is indicated by X(X),
   X(M)/{X (Ni) + X (X)} that is a ratio of the atomic concentration of the element M to a total atomic concentration of nickel and the element X is 0.3 or more and 6.0 or less.

5. The lithium metal composite oxide powder according to any one of Claims 1 to 4,
   wherein an average particle diameter $D_{50}$ that is a 50% cumulative diameter obtained from wet-type particle size distribution measurement is 2 $\mu$m or more and 20 $\mu$m or less.

6. A positive electrode active material for a lithium secondary battery, comprising:
   the lithium metal composite oxide powder according to any one of Claims 1 to 5.

7. A method for producing a lithium metal composite oxide powder, comprising:

   mixing a precursor of a positive electrode active material for a lithium secondary battery and a lithium compound to obtain a first mixture;
   calcining the first mixture to obtain a raw material compound;
   mixing the raw material compound and a compound containing an element M to obtain a second mixture; and
   carrying out a thermal treatment in which the second mixture is heated in an oxidizing atmosphere,
   wherein a BET specific surface area of the compound containing the element M is 0.14 $m^2$/g or more and 2.0 $m^2$/g or less.

8. The method for producing a lithium metal composite oxide powder according to Claim 7,
   wherein a lithium metal composite oxide that is obtained after the thermal treatment is represented by the following composition formula (I),

$$Li[Li_{n1}(Ni_{(1-n-w)}X_nM_w)_{1-n1}]O_2 \qquad ...(I)$$

   (M is one or more elements selected from the group consisting of B, Si, S, and P, and X is one or more elements selected from the group consisting of Co, Mn, Fe, Cu, Ti, Mg, Al, W, Mo, Nb, Zn, Sn, Zr, Ga, and V; here, $-0.1 \leq n1 \leq 0.2$, $0 < n \leq 0.8$, $0 < w \leq 0.05$, and $n + w < 1$ are satisfied).

9. The method for producing a lithium metal composite oxide powder according to Claim 7 or 8,
   wherein, in the obtaining of the second mixture, the raw material compound and the compound containing the element M are mixed such that S1/S2 that is a ratio of a BET specific surface area S1 of the raw material compound to a BET specific surface area S2 of the compound containing the element M becomes 0.2 or more and 10 or less.

10. The method for producing a lithium metal composite oxide powder according to any one of Claims 7 to 9,
    wherein, in the obtaining of the second mixture, a molar amount of the compound of the element M is more than 0 mol% and 5 mol% or less with respect to a total amount (100 mol%) of the raw material compound charged.

**11.** The method for producing a lithium metal composite oxide powder according to any one of Claims 7 to 10, wherein, in the thermal treatment, heating is carried out at a temperature of 250°C or higher and 550°C or lower.

FIG. 1A

FIG. 1B

FIG. 2

FIG. 3

FIG. 4

FIG. 5

FIG. 6

FIG. 7

## INTERNATIONAL SEARCH REPORT

| International application No. |
|---|
| PCT/JP2019/050010 |

A. CLASSIFICATION OF SUBJECT MATTER
Int. Cl. C01L53/00(2006.01)i, H01M4/505(2010.01)i, H01M4/525(2010.01)i
FI: C01G53/00 A, H01M4/525, H01M4/505
According to International Patent Classification (IPC) or to both national classification and IPC

B. FIELDS SEARCHED

Minimum documentation searched (classification system followed by classification symbols)
Int. Cl. C01G53/00, H01M4/505, H01M4/525

Documentation searched other than minimum documentation to the extent that such documents are included in the fields searched
Published examined utility model applications of Japan      1922-1996
Published unexamined utility model applications of Japan    1971-2020
Registered utility model specifications of Japan            1996-2020
Published registered utility model applications of Japan    1994-2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2015-111560 A (NICHIA CHEMICAL INDUSTRIES, LTD.) 18 June 2015, paragraphs [0043], [0044] | 1-11 |
| A | JP 2016-115658 A (SUMITOMO METAL MINING CO., LTD.) 23 June 2016, paragraphs [0053]-[0055] | 1-11 |

☐ Further documents are listed in the continuation of Box C.   ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 03.02.2020 | 10.02.2020 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

INTERNATIONAL SEARCH REPORT

Information on patent family members

| International application No. |
| --- |
| PCT/JP2019/050010 |

| Patent Documents referred to in the Report | Publication Date | Patent Family | Publication Date |
| --- | --- | --- | --- |
| JP 2015-111560 A | 18.06.2015 | US 2015/0118564 A1 paragraphs [0059], [0060] | |
| JP 2016-115658 A | 23.06.2016 | (Family: none) | |

Form PCT/ISA/210 (patent family annex) (January 2015)

**EP 3 954 657 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019076524 A
- JP 2002042812 A
- JP 2002201028 A